(19) Europäisches Patentamt

European Patent Office

Office européen des brevets

(11) **EP 4 535 693 A1**

(12) **EUROPEAN PATENT APPLICATION**
published in accordance with Art. 153(4) EPC

(43) Date of publication:
**09.04.2025  Bulletin 2025/15**

(21) Application number: **22943129.1**

(22) Date of filing: **25.05.2022**

(51) International Patent Classification (IPC):
*H04L 1/00* (2006.01)     *H04L 27/00* (2006.01)

(86) International application number:
**PCT/CN2022/095082**

(87) International publication number:
**WO 2023/225924 (30.11.2023 Gazette 2023/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **ZHU, Yajun
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **DOWNLINK CONTROL INFORMATION SIZE ALIGNMENT METHOD AND APPARATUS, AND
COMMUNICATION APPARATUS AND STORAGE MEDIUM**

(57)    The present disclosure relates to a downlink control information size alignment method and apparatus, and a communication apparatus and a storage medium. The downlink control information size alignment method comprises: determining that the size of downlink control information (DCI) for scheduling data of a plurality of cells is aligned with the size of DCI for scheduling data of a single cell. According to the present disclosure, it can be determined that the size of DCI for scheduling data of a plurality of cells is aligned with the size of DCI for scheduling data of a single cell, thereby reducing the number of size types of DCI which is received by a terminal in a serving cell, and facilitating a reduction in complexity of blind DCI detection of the terminal.

determining that a size of DCI for scheduling data of multiple cells and
a size of DCI for scheduling data of a single cell are aligned

S101

FIG. 1

EP 4 535 693 A1

## Description

## TECHNICAL FIELD

The disclosure relates to the field of communication technologies, more particularly to a method and an apparatus for a downlink control information (DCI) size alignment, a communication device, and a computer readable storage medium.

## BACKGROUND

5G new radio (NR) works in a relatively wide spectrum range. With re-farming of a frequency band corresponding to a cellular network in the related art, a utilization rate of a corresponding frequency spectrum may be steadily improved. However, for a frequency range 1 (FR1), available frequency resources are gradually fragmented. In order to meet different spectrum requirements, these fragmented spectrum resources need to be employed in a more flexible way with a high spectrum/power efficiency, thus achieving a high network throughput and a good coverage.

Based on a current mechanism, one piece of downlink control information (DCI) in a serving cell in the related art is only allowed to schedule data of one cell. With the gradual fragmentation of the frequency resources, a requirement for scheduling data of multiple cells simultaneously may increase gradually. Therefore, there needs to introduce DCI for scheduling the data of the multiple cells.

However, DCI introduced newly may cause increasing a DCI size category, and at the same time, multiple DCI size categories may cause increasing a complexity of blind detection on the DCI by a terminal.

## SUMMARY

For this, embodiments of the disclosure provide a method and an apparatus for a downlink control information (DCI) size alignment, a communication device, and a computer readable storage medium, to solve the technical problem in the related art.

According to a first aspect of embodiments of the disclosure, there is provided a method for a DCI size alignment, applied to a terminal. The method includes: determining that a size of DCI for scheduling data of multiple cells and a size of DCI for scheduling data of a single cell are aligned.

According to a second aspect of embodiments of the disclosure, there is provided a method for a DCI size alignment, applied to a terminal. The method includes: determining that a size of first DCI for scheduling uplink data of multiple cells and a size of second DCI for scheduling downlink data of multiple cells are aligned.

According to a third aspect of embodiments of the disclosure, there is provided a method for a DCI size alignment, applied to a terminal. The method includes:

determining that sizes of DCI for scheduling data of a single cell are aligned based on a predefined mechanism; determining the sizes of the DCI for scheduling the data of the single cell and a size of DCI for scheduling data of multiple cells in a cell for sending the DCI; determining candidate DCI from the DCI for scheduling the data of the single cell in case that a number of DCI size categories is greater than a preset threshold; determining target DCI from the candidate DCI; and determining that a size of the target DCI and the size of the DCI for scheduling the data of the multiple cells are aligned.

According to a fourth aspect of embodiments of the disclosure, there is provided a method for a DCI size alignment, applied to a network device. The method includes: aligning a size of DCI for scheduling data of multiple cells with a size of DCI for scheduling data of a single cell.

According to a fifth aspect of embodiments of the disclosure, there is provided a method for a DCI size alignment, applied to a network device. The method includes: aligning a size of first DCI for scheduling uplink data of multiple cells with a size of second DCI for scheduling downlink data of the multiple cells.

According to a sixth aspect of embodiments of the disclosure, there is provided a method for a DCI size alignment, applied to a network device. The method includes: aligning sizes of DCI for scheduling data of a single cell based on a predefined mechanism; determining the sizes of the DCI for scheduling the data of the single cell and a size of DCI for scheduling data of a plurality of cells in a cell for sending the DCI; determining candidate DCI from the DCI for scheduling the data of the single cell in case that a number of DCI size categories is greater than a preset threshold; determining target DCI from the candidate DCI; and aligning a size of the target DCI with the size of the DCI for scheduling the data of the multiple cells.

According to a seventh aspect of embodiments of the disclosure, there is provided an apparatus for a DCI size alignment, applied to a terminal. The apparatus includes: a processing module, configured to determine that a size of DCI for scheduling data of multiple cells and a size of DCI for scheduling data of a single cell are aligned.

According to an eighth aspect of embodiments of the disclosure, there is provided an apparatus for a DCI size alignment, applied to a terminal. The apparatus includes: a processing module, configured to determine that a size of first DCI for scheduling uplink data of multiple cells and a size of second DCI for scheduling downlink data of multiple cells are aligned.

According to a ninth aspect of embodiments of the disclosure, there is provided an apparatus for a DCI size alignment, applied to a terminal. The apparatus includes: a processing module, configured to determine that sizes of DCI for scheduling data of a single cell are aligned based on a predefined mechanism; to determine the sizes of DCI for scheduling data of the single cell and a size of DCI for scheduling data of multiple cells in a cell for sending the DCI; to determine candidate DCI from the DCI for scheduling the data of the single cell in case that a number of DCI size categories is greater than a preset threshold; to determine target DCI from the candidate DCI; and to determine that a size of the target DCI and the size of the DCI for scheduling the data of the multiple cells are aligned.

According to a tenth aspect of embodiments of the disclosure, there is provided an apparatus for a DCI size alignment, applied to a network device. The apparatus includes: a processing module, configured to align a size of DCI for scheduling data of multiple cells with a size of DCI for scheduling data of a single cell.

According to an eleventh aspect of embodiments of the disclosure, there is provided an apparatus for a DCI size alignment, applied to a network device. The apparatus includes: a processing module, configured to align a size of first DCI for scheduling uplink data of multiple cells with a size of second DCI for scheduling downlink data of multiple cells.

According to a twelfth aspect of embodiments of the disclosure, there is provided an apparatus for a DCI size alignment, applied to a network device. The apparatus includes: a processing module, configured to align sizes of DCI for scheduling data of a single cell based on a predefined mechanism; to determine the sizes of the DCI for scheduling the data of the single cell and a size of DCI for scheduling data of multiple ells in a cell for sending the DCI; to determine candidate DCI from the DCI for scheduling the data of the single cell in case that a number of DCI size categories is greater than a preset threshold; to determine target DCI from the candidate DCI; and to align a size of the target DCI with the size of the DCI for scheduling the data of the multiple cells.

According to a thirteenth aspect of embodiments of the disclosure, there is provided a communication device, including: a processor; and a memory for storing a computer program. When the computer program is executed by the processor, the above method for the DCI size alignment applied to the terminal is realized.

According to a fourteenth aspect of embodiments of the disclosure, there is provided a communication device, including: a processor; and a memory for storing a computer program. When the computer program is executed by the processor, the above method for the DCI size alignment applied to the network device is realized.

According to a fifteenth aspect of embodiments of the disclosure, there is provided a computer-readable storage medium for storing a computer program. When the computer program is executed by the processor, the steps in the above method for the DCI size alignment applied to the terminal are realized.

According to a sixteenth aspect of embodiments of the disclosure, there is provided a computer-readable storage medium for storing a computer program. When the computer program is executed by the processor, the steps in the above method for the DCI size alignment applied to the network device are realized.

According to embodiments of the disclosure, the size of DCI for scheduling the data of the multiple cells may be aligned with the size of DCI for scheduling the data of the single cell, thus reducing the number of DCI size categories received by the terminal in the serving cell, which is beneficial to reducing the complexity of blind detection on the DCI by the terminal.

**BRIEF DESCRIPTION OF THE DRAWINGS**

In order to more clearly illustrate a technical solution in embodiments of the disclosure, accompanying drawings needed to use in the description of embodiments will be introduced clearly below. Apparently, the accompanying drawings described below are only a part of embodiments of the disclosure. For the ordinary skilled in the art, other accompanying drawings may further be obtained based on these accompanying drawings without creative work.

FIG. 1 is a flow chart illustrating a method for a downlink control information (DCI) size alignment according to an embodiment of the disclosure.
FIG. 2 is a flow chart illustrating a method for a downlink control information (DCI) size alignment according to another embodiment of the disclosure.
FIG. 3 is a flow chart illustrating a method for a downlink control information (DCI) size alignment according to another embodiment of the disclosure.
FIG. 4 is a flow chart illustrating a method for a downlink control information (DCI) size alignment according to another embodiment of the disclosure.
FIG. 5 is a flow chart illustrating a method for a downlink control information (DCI) size alignment according to another embodiment of the disclosure.
FIG. 6 is a flow chart illustrating a method for a downlink control information (DCI) size alignment according to an embodiment of the disclosure.
FIG. 7 is a flow chart illustrating a method for a downlink control information (DCI) size alignment according to another embodiment of the disclosure.
FIG. 8 is a flow chart illustrating a method for a downlink control information (DCI) size alignment according to another embodiment of the disclosure.
FIG. 9 is a flow chart illustrating a method for a downlink control information (DCI) size alignment according to an embodiment of the disclosure.
FIG. 10 is a flow chart illustrating a method for a downlink control information (DCI) size alignment according to another embodiment of the disclosure.
FIG. 11 is a flow chart illustrating a method for a downlink control information (DCI) size alignment according to an embodiment of the disclosure.
FIG. 12 is a flow chart illustrating a method for a downlink control information (DCI) size alignment according to an embodiment of the disclosure.

FIG. 13 is a flow chart illustrating a method for a downlink control information (DCI) size alignment according to an embodiment of the disclosure.

FIG. 14 is a block diagram illustrating an apparatus for a downlink control information (DCI) size alignment according to an embodiment of the disclosure.

FIG. 15 is a block diagram illustrating an apparatus for a downlink control information (DCI) size alignment according to an embodiment of the disclosure.

FIG. 16 is a block diagram illustrating an apparatus for a downlink control information (DCI) size alignment according to an embodiment of the disclosure.

FIG. 17 is a block diagram illustrating an apparatus for a downlink control information (DCI) size alignment according to an embodiment of the disclosure.

FIG. 18 is a block diagram illustrating an apparatus for a downlink control information (DCI) size alignment according to an embodiment of the disclosure.

FIG. 19 is a block diagram illustrating an apparatus for a downlink control information (DCI) size alignment according to an embodiment of the disclosure.

FIG. 20 is a block diagram illustrating a device for a downlink control information (DCI) size alignment according to an embodiment of the disclosure.

FIG. 21 is a block diagram illustrating a device for a downlink control information (DCI) size alignment according to an embodiment of the disclosure.

## DETAILED DESCRIPTION

The technical solution in embodiments of the disclosure may be described clearly and completely with reference to accompanying drawings in embodiments of the disclosure. Obviously, the embodiments described are merely a part of embodiments of the disclosure, not all embodiments. Based on embodiments in the disclosure, all other embodiments obtained by the ordinary skilled in the art without creative work belong to a scope of protection in the disclosure.

Terms described in the embodiments of the disclosure are only for the purpose of describing specific embodiments, but should not be construed to limit the embodiments of the disclosure. As used in the embodiments of the disclosure and the appended claims, "alan", "said" and "the" in singular forms are intended to include plural forms, unless clearly indicated in the context otherwise. It should also be understood that, the term "and/or" used herein represents and contains any or all possible combinations of one or more associated listed items.

It should be understood that, although the terms such as "first", "second", "third", etc. may be used in embodiments of disclosure to describe various information, such information should not be limited by these terms. These terms are only used to distinguish the same type of information from each other. For example, first information may also be referred to as second information, and similarly, the second information may also be referred to as the first information, without departing from the scope of embodiments of the disclosure. As used herein, the term "if" may be construed to mean "when" or "upon" or "in response to determining" depending on the context.

For the purpose of conciseness and easy understanding, the term used to represent a size relationship in the disclosure is "greater than" or "lower than", "more than" or "less than". However, for the skilled in the art, it may be understood that, the term "greater than" also covers a meaning of "greater than or equal to", and the term "less than" also covers a meaning of "less than or equal to". The term "more than" covers a meaning of "more than or equal to", and the term "less than" also covers a meaning of "less than or equal to".

Embodiments of the disclosure provide several methods for a downlink control information (DCI) size alignment. The method for the DCI size alignment may be applied to a terminal. The terminal includes, but not limited to, a communication device such as a mobile phone, a tablet, a wearable device, a sensor, an Internet of things device, or the like. The terminal may communicate with a network device. The network device includes, but not limited to, a network device, such as a base station and a core network, in a communication system such as 4G, 5G, 6G or the like.

It should be noted that, a size of DCI may also be translated as a DCI size, which may refer to the number of bits occupied by the DCI or a length of the DCI.

In all embodiments of the disclosure, data of a serving cell may refer to a physical downlink shared channel (PDSCH) of the serving cell, a physical uplink shared channel (PUSCH) of the serving cell, or the like.

In all embodiments of the disclosure, a DCI alignment way include, but not limited to, at least one of:

zero padding, increasing a reserved state, or reducing the number of bits occupied by a specific DCI field.

Two DCI, such as DCI#1 and DCI#2 are taken as examples. For example, a size of the DCI#1 is 3 bits, and a size of the DCI#2 is 2 bits. The DCI#1 includes an information field#1 and an information field #2, and the information field #1 occupies 2 bits, and the information field #2 occupies 1 bit. The DCI#2 also includes an information field #1 and an information field #2, the information field #1 occupies 1 bit, and the information field #2 occupies 1 bit. A type of the information field #1 in the DCI#1 is the same as a type of the information field #1 in the DCI#2, and a type of the information field #2 in the DCI#1 is the same as a type of the information field #2 in the DCI#2. In this case, description is made below to the above two ways for examples.

For example, the DCI#1 is aligned with the DCI#2 in a zero-padding way. One bit may be added after the two bits of the DCI#2, so the size of the DCI#2 is the same as the size of the DCI#1, with three bits.

In this case, the DCI#2 after the alignment indicates the same state as the DCI#2 before the alignment, and may indicate two to a power of one, twice, that is, four states in total. The third bit (that is, a supplemented bit) in the DCI#2 after the alignment is always 0, and only the first two bits change based on an indicated content.

For example, the DCI#1 is aligned with the DCI#2 in the way of increasing the reserved state, and the information fields with the same type may be aligned preferentially. For example, the information field #2 in the DCI#1 and the information field #2 in the DCI#1 are not aligned yet, so the information field #2 in the DCI#1 may be aligned with the information field #2 in the DCI#2 preferentially. For example, a bit is added after the bit occupied by the information field #2 in the DCI#2, then the size of the DCI#2 is the same as the size of the DCI#1, with three bits.

In this case, the information field #2 in the DCI#2 may indicate more states after the alignment than before the alignment. For example, the information field #2 in the DCI#2 before the alignment may indicate two to a power of one, once, that is, two states in total, and the DCI#2 after the alignment may indicate two to a power of one, twice, that is, four states in total. The first two states may be the same as states indicated by the information field #2 in the DCI#2 before the alignment, and the other two states may be reserved states added newly. All three bits in the DCI#2 after the alignment may be changed based on the indicated content.

Of course, the DCI alignment way is not limited to the above ways of adding the bit, such as the zero padding, increasing the reserved state, or the like, but the DCI may also be aligned by reducing a bit in a specific information field. For example, the information fields with the same type are aligned preferentially. Since the information field #2 in the DCI#1 is not aligned with the information field #2 in the DCI#1, the information field #2 in the DCI#1 may be aligned with the information field #2 in the DCI#2 preferentially. For example, one bit is subtracted from the bits occupied by the information field #2 in the DCI#1, then the size of the DCI#2 is the same as the size of the DCI#1, with two bits.

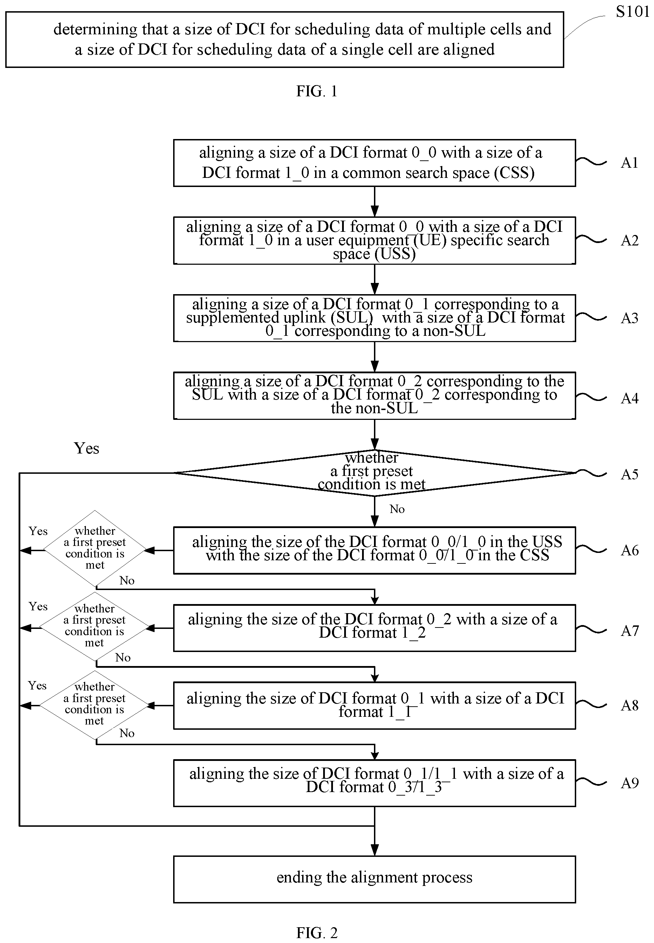

FIG. 1 is a flow chart illustrating a method for a DCI size alignment according to an embodiment of the disclosure. As illustrated in FIG. 1, the method for the DCI size alignment may include the following.

At block S101, it is determined that a size of DCI for scheduling data of multiple cells and a size of DCI for scheduling data of a single cell are aligned.

In an embodiment, the DCI for scheduling the data of the single cell may be legacy DCI. For example, the DCI for scheduling the data of the single cell includes at least one of:

a DCI format 0_0, a DCI format 1_0, a DCI format 0_1, a DCI format 1_1, a DCI format 0_2, or a DCI format 1_2.

In an embodiment, a DCI format for scheduling the data of the multiple cells may be set to be different from a legacy DCI format for scheduling the data of the single cell, or may be set to be the same as the legacy DCI format for scheduling the data of the single cell. Description is made below to the technical solution of the disclosure for example, mainly in the case that the DCI format for scheduling the data of the multiple cells is different from the legacy DCI format for scheduling the data of the single cell.

In an embodiment, the DCI for scheduling the data of the multiple cells may include first DCI for scheduling uplink data of the multiple cells and second DCI for scheduling downlink data of the multiple cells. For example, the DCI for scheduling the data of the multiple cells may be set to include a DCI format 0_3 and/or a DCI format 1_3. The first DCI is the DCI format 0_3 for scheduling the uplink data of the multiple cells, and the second DCI is the DCI format 1_3 for scheduling the downlink data of the multiple cells.

It should be noted that the DCI for scheduling the data of the multiple cells may also be used to schedule the data of the single cell in some cases. A format of the first DCI may be the same as or different from a format of the second DCI. Exemplary description may be made below mainly in case that the format of the first DCI is different from the format of the second DCI.

The DCI for scheduling the data of the single cell is only included in the art generally, and the size of the DCI for scheduling the data of the multiple cells may be different from the size of the DCI for scheduling the data of the single cell after the DCI for scheduling the data of the multiple cells is added newly, which may cause increasing the number of DCI size categories received by the terminal in the serving cell, thus increasing the complexity of blind detection on the DCI by the terminal.

According to embodiments of the disclosure, the network device may align the size of the DCI for scheduling the data of the multiple cells with the size of the DCI for scheduling the data of the single cell, and accordingly, the terminal may determine that the size of the DCI for scheduling the data of the multiple cells and the size of the DCI for scheduling the data of the single cell are aligned, thus reducing the number of DCI size categories received by the terminal in the serving cell, which is beneficial to reducing the complexity of blind detection on the DCI by the terminal.

In all embodiments of the disclosure, the serving cell may be a cell where the terminal receives the DCI for scheduling the data of the multiple cells and the DCI for scheduling the data of the single cell. For example, the serving cell may be a primary cell, a primary secondary cell, a secondary cell, or the like.

It should be noted that, in all embodiments of the disclosure, aligning the sizes of the DCI by the network device means that the network device performs an actual alignment operation based on steps. For example, the network device aligns the sizes of the multiple DCI by changing the size of one or more DCI. For example, the network device performs size alignment by the zero padding, increasing the reserved state, reducing the number of bits occupied by the specific information field, or the like.

Performing the alignment by determining the size of DCI through the terminal does not mean aligning the sizes of the DCI, such as changing the size of the DCI, but the terminal deduces the alignment operation based on steps to determine the size of the DCI after the alignment operation based on the steps, such as the number of bits occupied by the DCI, and then realizes the detection and analysis of the DCI based on the size of the DCI. In addition, the terminal may also determine which bit in the DCI belongs to the supplemented bit, to accurately analyze the DCI.

FIG. 2 is a flow chart illustrating a method for a DCI size alignment according to another embodiment of the disclosure. FIG. 2 illustrates the following.

At step A1, a size of a DCI format 0_0 is aligned with a size of a DCI format 1_0 in a common search space (CSS), which may be called DCI size alignment of DCI format 0_0 and DCI format 1_0 in USS.

At step A2, a size of a DCI format 0_0 is aligned with a size of a DCI format 1_0 in a user equipment (UE) specific search space (USS), which may be called DCI size alignment of DCI format 0_0 and DCI format 1_0 in USS.

At step A3, a non-fallback DCI operation. For example, a size of a DCI format 0_1 corresponding to a supplemented uplink (SUL) is aligned with a size of a DCI format 0_1 corresponding to a non-SUL, which may be called DCI size alignment of format 0_1 SUL/non SUL.

At step A4, an ultra-reliable and low latency communication (URLLC) correspond to a DCI operation. For example, a size of a DCI format 0_2 corresponding to the SUL is aligned with a size of a DCI format 0_2 corresponding to the non-SUL, which may be called DCI size alignment of format 0_2 SUL/non SUL.

At step A5, it is determined whether a first preset condition is met (for example, for a legacy DCI). The first preset condition includes that the number of DCI size categories of scrambled DCI by a cell-radio network temporary identifier (C-RNTI) for the terminal in the serving cell is less than or equal to 3, and it is determined whether the number of DCI size categories configured for the terminal in the serving cell is less than or equal to 4. In case that the first preset condition is met, a DCI alignment process may be ended. In case that the first preset condition is not met, a next step (step A6) is entered.

It should be noted that, at step A6 and each step after step A6, there needs to determine again whether the first preset condition is met, that is, the number of DCI size categories of the scrambled DCI by the C-RNTI for the terminal in the serving cell is less than or equal to 3, and it is determined whether the number of DCI size categories configured for the terminal in the serving cell is less than or equal to 4. In case that the first preset condition is met, the DCI alignment process may be ended; and in case that the first preset condition is not met, a next step is entered (step A6). In order to simplify the description, the text part is not repeated here, and only illustrated in the FIG. 2.

At step A6, aligning the sizes of the DCI format 0_0/1_0 in the USS with the sizes of the DCI format 0_0/1_0 in the CSS includes the following.

The size corresponding to the DCI format 0_0 in the USS is determined by an uplink initial access band width part (BWP) ($N_{RB}^{UL,BWP}$), and the size corresponding to the DCI format 1_0 in the USS is determined by the downlink initial access BWP ($N_{RB}^{DL,BWP}$). In case that the size of the DCI format 0_0 is lower than the size of the DCI format 1_0 before the zero padding, the size of the DCI format 0_0 subjected to the zero padding is aligned with the size of the DCI format 1_0. In case that the size of the DCI format 0_0 is greater than the size of the DCI format 1_0 before truncation operation, first bits of an FDRA field in the DCI format 0_0 may be punched, to realize that the size of the DCI format 0_0 is aligned with the size of the DCI format 1_0.

Step A6 may be called a DCI size alignment of the DCI format 0_0/1_0 in the USS and the DCI format 0_0/1_0 in the CSS.

At step A7, a size of a DCI format 0_2 is aligned with a size of a DCI format 1_2, which may be called DCI size alignment of DCI format 0_2/1_2.

At step A8, a size of a DCI format 0_1 is aligned with a size of a DCI format 1_1, which may be called DCI size alignment of DCI format 0_1/1_1.

At step A9, the size of DCI format 0_1/1_1 is aligned with a size of a DCI format 0_3/1_3 (that is, the size of the DCI format 0_1 is aligned with the size of the DCI format 0_3, and the size of the DCI format 1_1 is aligned with the size of the DCI format 1_3), which may also be called DCI size alignment of DCI format 0_1/1_1 and DCI format 0_3/1_3.

The alignment way may include: determining sizes of two DCI that need to be aligned, determining a difference between the sizes of the two DCI, and supplementing a bit to a DCI with a relatively small size based on the difference.

The size of the DCI format 0_1 being assigned with the size of the DCI format 0_3 is taken as an example. For example, the DCI format 0_1 is 20 bits, and the DCI format 0_3 is 30 bits. First, it is determined that a difference between the size of the DCI format 0_3 and the size of the DCI format 0_1 is 10 bits. Then 10 bits may be supplemented at the end of the DCI format 0_1 by the zero padding, and the size of the DCI format 0_1 after supplementing the bits is also 30 bits, thus realizing that the size of the DCI format 0_1 is assigned with the size of the DCI format 0_3.

The size of the DCI format 0_1 is aligned with the size of the DCI format 1_1 at step A8. Therefore, at step A9, the size of the DCI format 0_1 is aligned with the size of the DCI format 0_3, and the size of the DCI format 1_1 is aligned with the size of the DCI format 1_3, such that the size of the DCI format 0_1 is the same as the size of the DCI format 0_3, and/or the size of the DCI format 1_1 is the same as the size of the DCI format 1_3, thus effectively reducing the number of DCI size categories.

In addition, the size of the DCI format 0_3 may be aligned with the size of the DCI format 1_3 first, then the above step A9 may be executed after it may be determined that the first preset condition is not met. The content of aligning the size of the DCI format 0_3 with the size of the DCI format 1_3 may be explained in following embodiments.

As illustrated in FIG. 2, before the size of the DCI (such as, the DCI format 0_3/1_3) for scheduling the data of the multiple cells is aligned with the size of the DCI (such as, the DCI format 0_1/1_1) for scheduling the data of the single cell, sizes of other DCI may be aligned first. The operation of aligning the size of the DCI for scheduling the data of the multiple cells with the size of the DCI for scheduling the data of the single cell may be set at step A9 as illustrated in FIG. 2, that is, an execution order may also be adjusted as required and set between any two steps after all the alignment steps.

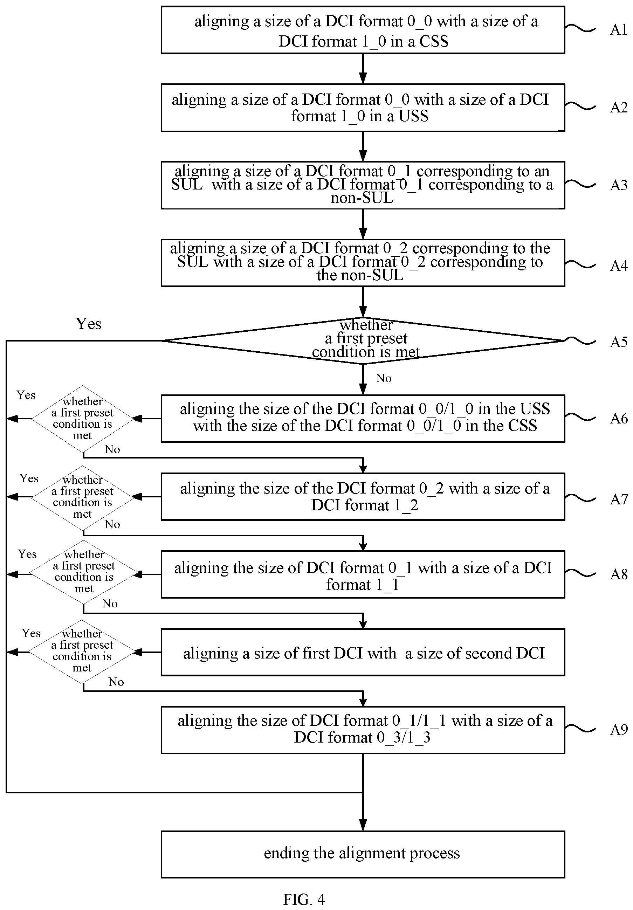

It should be noted that, in order to avoid redundant description, both "determining that a/the size of ...and a/the size of... are aligned" with respect to the terminal and "aligning ... with" with respect to the network device are described as "aligning ... with", for example, as illustrated in FIG. 2, and as illustrated in FIGs. 4, 5, 7, 8 and 10 of subsequent embodiments. However, it should be understood that, the description of "aligning... with" in these accompanying drawings may be replaced by "determining that a/the size of ...and a/the size of... are aligned" when applied to the terminal, and understood as "aligning ... with" when applied to the network device.

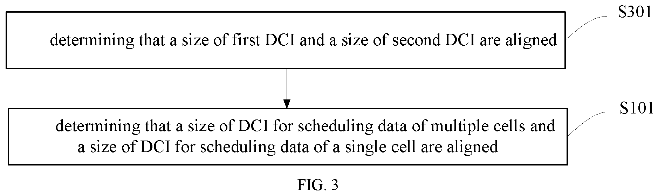

FIG. 3 is a flow chart illustrating a method for a downlink control information (DCI) size alignment according to another embodiment of the disclosure. As illustrated in FIG. 3, the method also includes the following.

At block S301, it is determined that a size of first DCI and a size of second DCI are aligned, before determining that a size of DCI for scheduling data of the multiple cells and a size of DCI for scheduling data of a single cell are aligned.

In an embodiment, before determining that the size of the DCI for scheduling the data of the multiple cells and the size of the DCI for scheduling the data of the single cell are aligned, in case that the size of the first DCI is different from the size of the second DCI, it may be determined that the size of the first DCI and the size of the second DCI are aligned first.

After it is determined that the size of the first DCI and the size of the second DCI are aligned, it may be determined whether a first preset condition is met. In case that the first preset condition is met, a subsequent alignment operation may be not performed, for example, there is no need to determine that the size of the DCI for scheduling the data of the multiple cells and the size of the DCI for scheduling the data of the single cell are aligned. In case that the first preset condition is not met, the subsequent alignment operation may be performed continuously, for example, it is determined that the size of the DCI for scheduling the data of the multiple cells and the size of data DCI for scheduling the data of the single cell are aligned.

FIG. 4 is a flow chart illustrating a method for a downlink control information (DCI) size alignment according to another embodiment of the disclosure. As illustrated in FIG. 4, on the basis of the embodiments illustrated in FIG. 2, determining the size alignment of the first DCI and the second DCI includes:

determining that a size of first DCI and a size of second DCI are aligned, after determining that a size of a DCI format 0_1 and a size of a DCI format 1_1 are aligned.

In an embodiment, since the size of the first DCI and/or the second DCI, such as a size of a DCI format 0_3 and/or a size of a DCI format 1_3, is relatively large (that is, occupying a relatively large number of bits), aligning the size of the DCI format 0_3 with the size of the DCI format 1_3 needs to supplement the relatively large number of bits (for example, to supplement the DCI format 0_3 or the DCI format 1_3). However, the relatively large number of bits occupy a large amount of communication resources, which may reduce a transmission efficiency of a physical downlink control channel (PDCCH) where the DCI is located.

In an embodiment, it may be determined first that the size of the DCI format 0_1 and the size of the DCI format 1_1 are aligned, and then determined that the size of the DCI format 0_3 and the size of the DCI format 1_3 are aligned.

Since there needs to determine whether a first preset condition above is met after determining that the size of the DCI format 0_1 and the size of the DCI format 1_1 are aligned, and an alignment process may be ended in case that the first preset condition above is met, there is no need to determine that the size of the DCI format 0_3 and the size of the DCI format 1_3 are aligned. However, it is further determined that the size of the DCI format 0_3 and the size of the DCI format 1_3 are aligned in case that the first preset condition above is not met.

That is, after it is determined that the size of the DCI format 0_1 and the size of the DCI format 1_1 are aligned, there is a possibility that there is no need to determine that the size of the DCI format 0_3 and the size of the DCI format 1_3 are aligned, which may alleviate the problem that the transmission efficiency of the PDCCH is reduced due to the large number of supplemented bits to some extent.

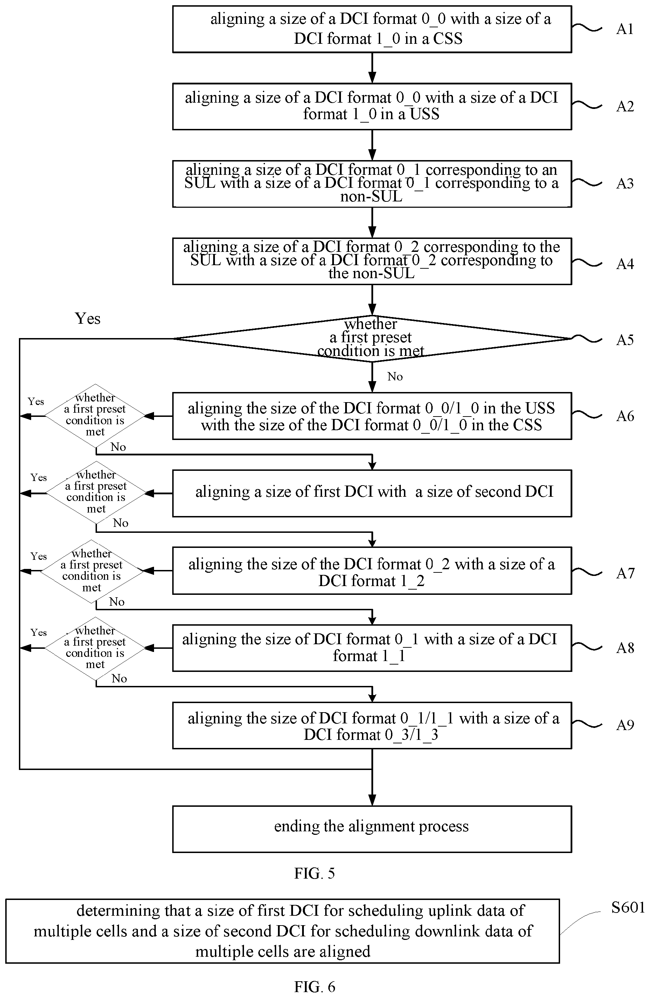

FIG. 5 is a flow chart illustrating a method for a downlink control information (DCI) size alignment according to another embodiment of the disclosure. As illustrated in FIG. 5, on the basis of embodiments illustrated in FIG. 2, determining the size alignment of the first DCI and the second DCI includes:

determining that a size of first DCI and a size of second DCI are aligned, before determining a size of a DCI format 0_2 and a size of a DCI format 1_2 are aligned.

In an embodiment, the first DCI and the second DCI, such as a DCI format 0_3 and/or a DCI format 1_3, are DCI for scheduling data of multiple cells, the first DCI and the second DCI are DCI formats added newly with respect to DCI for scheduling data of a single cell. In embodiments, in order to reduce an impact on a legacy DCI format as much as possible, for example, reduce an impact on the DCI format 0_2, the DCI format 1_2, a DCI format 0_1 and a DCI format 1_1, it may be determined first that the size of the DCI format 0_2 and the size of the DCI format 1_2 are aligned, and then determined that the size of the DCI format 0_3 and the size of the DCI format 1_3 are aligned.

There needs to determine whether a first preset condition above is met after determining that the size of the DCI format 0_3 and the size of the DCI format 1_3 are aligned. An alignment process is ended in case that the first preset condition is met, and there is no need to determine that the size of the DCI format 0_2 and the size of the DCI format 1_2 are aligned. It is further determined that the size of the DCI format 0_2 and the size of the DCI format 1_2 are aligned only in case that the first preset condition is not met

That is, it is determined first that the size of the DCI format 0_3 and the size of the DCI format 1_3 are aligned, and there is a possibility that there is no need to determine that the size of the DCI format 0_2 and the size of the DCI format 1_2 are aligned, thus reducing the impact on the legacy DCI format such as the DCI format 0_2 and the DCI format 1_2.

In an embodiment, the method also includes:

the terminal not expecting that the number of DCI size categories received in a serving cell is greater than four; and
the terminal not expecting that the number of DCI size categories of scrambled DCI by a C-RNTI and received in the serving cell is greater than three.

With the alignment operation in the above embodiments, it may be ensured that the number of DCI size categories received by the terminal in the serving cell is not more than 4 (i.e., less than or equal to 4), and the number of DCI size categories of the scrambled DCI by the C-RNTI received by the terminal in the serving cell is not more than 3 (i.e., less than or equal to 3), such that the terminal performs blind detection on the DCI in the serving cell based on a condition that the number of DCI size categories received is not more than 4 and the number of DCI size categories of the scrambled DCI by the C-RNTI is not more than 3, thus meeting a requirement of "3+1" and reducing the complexity of blind detection of the terminal.

In all embodiments of the disclosure, the network device may set specific indication fields in different DCI to indicate a DCI format, for example, indicating that the DCI is the DCI (such as, the legacy DCI) for scheduling the data of the single cell, or DCI newly added (such as, the DCI format 0_3 and the DCI format 1_3).

The network device may also scramble different DCI through different RNTIs. For example, the DCI for scheduling the data of the single cell may be scrambled by the C-RNTI, and the DCI for scheduling the data of the multiple cells may be scrambled by an RNTI defined newly (such as a multi-carrier scheduling-RNTI (MCS-RNTI)), or an RNTI (such as, a configuration-scheduling radio network temporary identifier (CS-RNTI), a semi-static channel state information radio network temporary identifier (SP-CSI-RNTI), or a modulation and coding strategy cell radio network temporary identifier (MCS-C-RNTI)) other than the C-RNTI.

Accordingly, the terminal may distinguish the DCI based on the RNTI scrambling the DCI. For example, in case that the RNTI scrambling the DCI is determined to be the C-RNTI, it may be determined that the DCI scrambled by the C-RNTI is used to schedule the data of the single cell. For example, in case that the RNTI scrambling the DCI is determined to be the MCS-RNTI, it may be determined that the DCI scrambled by the MCS-RNTI is used to schedule the data of the multiple cells.

In an embodiment, the method also includes:

in case that at least one PDCCH candidate of a DCI format 0_2 corresponding to a first USS and a DCI format 0_3 corresponding to a second USS is mapped to the same resource, the terminal does not expect that a size of the DCI format 0_2 corresponding to the first USS is the same as a size of the DCI format 0_3; and
in case that at least one PDCCH candidate of a DCI format 1_2 corresponding to the first USS and a DCI format 1_3 corresponding to the second USS is mapped to the same resource, the terminal does not expect that a size of the DCI format 1_2 corresponding to the first USS is the same as a size of the DCI format 1_3.

FIG. 6 is a flow chart illustrating a method for a DCI size alignment according to an embodiment of the disclosure. As illustrated in FIG. 6, the method for the DCI size alignment may include the following.

At block S601, it is determined that a size of first DCI for scheduling uplink data of multiple cells and a size of second DCI for scheduling downlink data of multiple cells are aligned.

In an embodiment, DCI for scheduling the data of the single cell may be legacy DCI. For example, DCI for scheduling data of a single cell includes at least one of: a DCI format 0_0, a DCI format 1_0, a DCI format 0_1, a DCI format 1_1, a DCI format 0_2, or a DCI format 1_2.

It should be noted that, the legacy DCI includes, but not limited to, the DCI format 0_1, the DCI format 1_1, the DCI format 0_2, the DCI format 1_2, the DCI format 0_0, the DCI format 1_0, and the like.

In an embodiment, a DCI format for scheduling the data of the multiple cells may be set to be different from a legacy DCI format for scheduling the data of the single cell, or may be set to be the same as the legacy DCI format for scheduling the data of the single cell. Exemplary description may be made below to the technical solution of the disclosure mainly in the case that the DCI format for scheduling the data of the multiple cells is different from the legacy DCI format for scheduling the data of the single cell.

In an embodiment, the DCI for scheduling the data of the multiple cells may include first DCI for scheduling uplink data of the multiple cells and second DCI for scheduling downlink data of the multiple cells. For example, the DCI for scheduling the data of the multiple cells may be set to include a DCI format 0_3 and/or a DCI format 1_3. The first DCI is the DCI format 0_3 for scheduling the uplink data of the multiple cells, and the second DCI is the DCI format 1_3 for scheduling the downlink data of the multiple cells.

The DCI for scheduling the data of the single cell is merely included in the art generally. Therefore, after the first DCI for scheduling the uplink data of the multiple cells and the second DCI for scheduling the downlink data of the multiple cells are added newly, and a size of the first DCI may be different from a size of the second DCI, it may be caused that the number of size categories of received DCI by the terminal in the serving cell (such as, a cell for sending the DCI for scheduling the data of the multiple cells and the DCI for scheduling the data of the single cell) is increased, thus increasing the complexity of blind detection on the DCI by the terminal.

According to embodiments of the disclosure, the network device may align the size of the first DCI for scheduling the uplink data of the multiple cells with the size of the second DCI for scheduling the downlink data of the multiple cells. Accordingly, the terminal may determine that the size of the first DCI for scheduling the uplink data of the multiple cells and size of the second DCI for scheduling the downlink data of the multiple cells are aligned, thus reducing the number of size categories of the received DCI by the terminal in the serving cell, which is beneficial to reducing the complexity of blind detection on the DCI by the terminal.

In an embodiment, determining that the size of the first DCI and the size of the second DCI are aligned includes:

determining that the size of the first DCI and the size of the second DCI are aligned, after determining that the size the DCI format 0_1 and the size of the DCI format 1_1 are aligned.

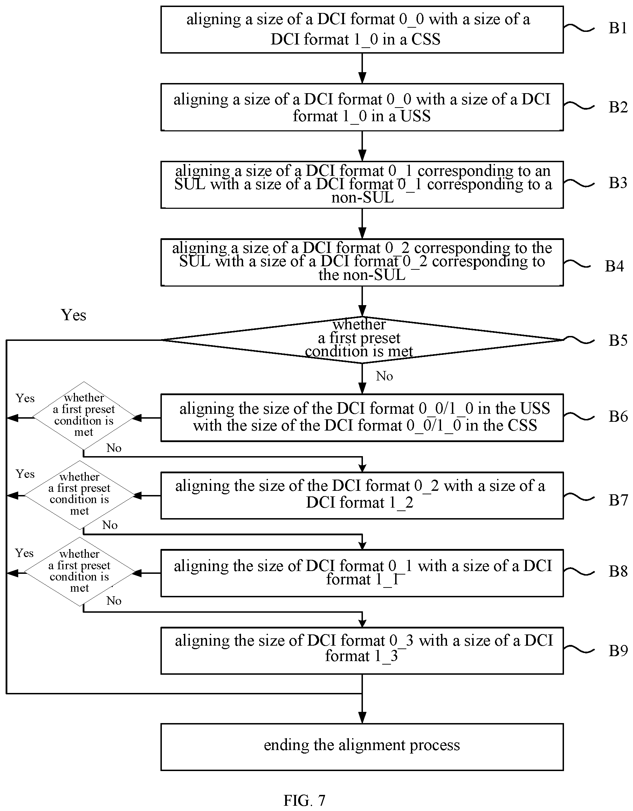

FIG. 7 is a flow chart illustrating a method for a DCI size alignment according to another embodiment of the disclosure. FIG. 7 illustrates the following.

At step B1, a size of a DCI format 0_0 is aligned with a size of a DCI format 1_0 in a CSS, which may be called DCI size alignment of DCI format 0_0 and DCI format 1_0 in CSS.

At step B2, a size of a DCI format 0_0 is aligned with a size of a DCI format 1_0 in a USS, which may be called DCI size alignment of DCI format 0_0 and DCI format 1_0 in USS.

At step B3, a non-fallback DCI operation. For example, a size of a DCI format 0_1 corresponding to an SUL is aligned with a size of a DCI format 0_1 corresponding to a non-SUL, which may be called DCI size alignment of format 0_1 SUL/non SUL.

At step B4, a URLLC correspond to a DCI operation. For example, a size of a DCI format 0_2 corresponding to the SUL is aligned with a size of a DCI format 0_2 corresponding to the non-SUL, which may be called DCI size alignment of format 0_2 SUL/non SUL.

At step B5, it is determined whether a second preset condition is met. The second preset condition includes that the number of DCI size categories of scrambled DCI by a C-RNTI for the terminal in the serving cell is less than or equal to 4, and it is determined whether the number of DCI size categories configured for the terminal in the serving cell is less than or equal to 5. In case that the second preset condition is met, a DCI alignment process may be ended. In case that the second preset condition is not met, a next step is entered (step B6).

It should be noted that, at the step B6 and each step after the step B6, there needs to determine again whether the second preset condition is met, that is, the number of DCI size categories of the scrambled DCI by the C-RNTI for the terminal in the serving cell is less than or equal to 4, and it is determined whether the number of DCI size categories configured for the terminal in the serving cell is less than or equal to 5. In case that the second preset condition is met, the DCI alignment process may be ended; and in case that the second preset condition is not met, a next step is entered. In order to simplify the description, the text part is not repeated here, and only illustrated in the FIG. 7.

At step B6, a detailed operation of aligning the size of the DCI format 0_0/1_0 in the USS with the size of the DCI format 0_0/1_0 in the CSS is the same as the detailed operation at step A6 above, which is not repeated here.

Step B6 may be called DCI size alignment of DCI format 0_0/1_0 in USS and DCI format 0_0/1_0 in CSS.

At step B7, a size of a DCI format 0_2 is aligned with a size of a DCI format 1_2, which may be called DCI size alignment of DCI format 0_2/1_2.

At step B8, a size of a DCI format 0_1 is aligned with a size of a DCI format 1_1, which may be called DCI size alignment of DCI format 0_1/1_1.

At step B9, a size of a DCI format 0_3 is aligned with a size of a DCI format 1_3, which may also be called DCI size alignment of DCI format 0_3/1_3.

The alignment way may include: determining sizes of two DCI that need to be aligned, determining a difference between the sizes of the two DCI, and supplementing a bit to a DCI with a relatively small size based on the difference.

Aligning the size of the DCI format 0_3 with the size of the DCI format 1_3 is taken as an example. For example, the size of the DCI format 0_3 is 20 bits, and the size of the DCI format 1_3 is 30 bits. First, it is determined that a difference between the size of the DCI format 1_3 and the size of the DCI format 0_3 is 10 bits. Then 10 bits may be supplemented at the end of the DCI format 0_3 by the zero padding, and the size of the DCI format 0_3 after supplementing the bits is also 30 bits, thus realizing aligning the size of the DCI format 0_3 and the size of the DCI format 1_3.

In an embodiment, since the size of the first DCI and/or the second DCI, such as the size of the DCI format 0_3 and/or the size of the DCI format 1_3, is relatively large (that is, occupying a relatively large number of bits), aligning the size of the DCI format 0_3 with the size of the DCI format 1_3 needs to supplement the relatively large number of bits (for example, to supplement the DCI format 0_3 or the DCI format 1_3). However, the relatively large number of bits occupy a large amount of communication resources, which may reduce a transmission efficiency of a physical downlink control channel (PDCCH) where the DCI is located.

In an embodiment, it may be determined first that the size of the DCI format 0_1 and the size of the DCI format 1_1 are aligned, and then determined that the size of the DCI format 0_3 and the size of the DCI format 1_3 are aligned.

Since there needs to determine whether the first preset condition above is met after determining that the size of the DCI format 0_1 and the size of the DCI format 1_1 are aligned, and an alignment process may be ended in case that the first preset condition above is met, there is no need to determine that the size of the DCI format 0_3 and the size of the DCI format 1_3 are aligned. However, it is further determined that the size of the DCI format 0_3 and the size of the DCI format 1_3 are aligned in case that the first preset condition above is not met.

That is, after it is determined that the size of the DCI format 0_1 and the size of the DCI format 1_1 are aligned, there is a possibility that there is no need to determine that the size of the DCI format 0_3 and the size of the DCI format 1_3 are aligned, which may alleviate the problem that the transmission efficiency of the PDCCH is reduced due to the large number of supplemented bits to some extent.

In an embodiment, determining that the size of the first DCI and the size of the second DCI are aligned includes:

determining that the size of the first DCI and the size of the second DCI are aligned, before determining that the size of the DCI format 0_2 and the size of the DCI format 1_2 are aligned.

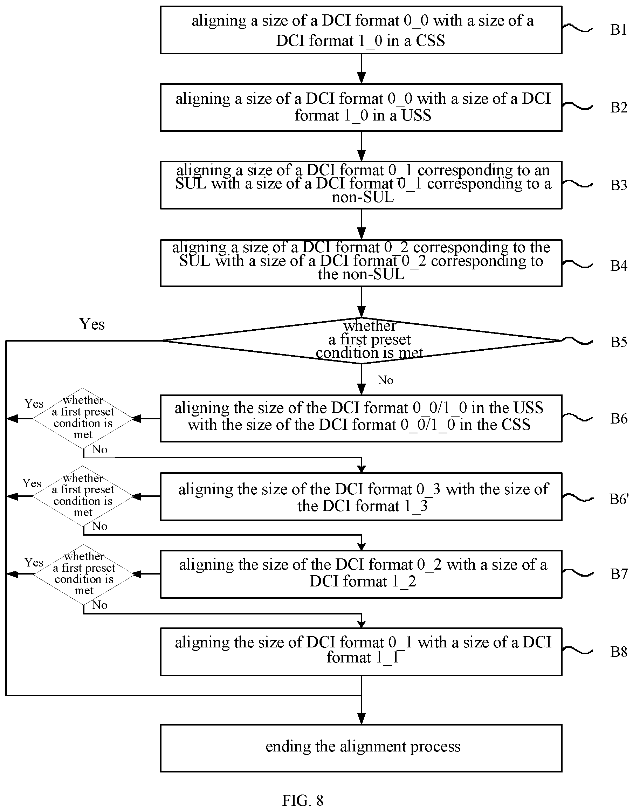

FIG. 8 is a flow chart illustrating a method for a DCI size alignment according to another embodiment of the disclosure. FIG. 8 illustrates the following.

At step B1, a size of a DCI format 0_0 is aligned with a size of a DCI format 1_0 in a CSS, which may be called DCI size alignment of DCI format 0_0 and DCI format 1_0 in CSS.

At step B2, a size of a DCI format 0_0 is aligned with a size of a DCI format 1_0 in a USS, which may be called DCI size alignment of DCI format 0_0 and DCI format 1_0 in USS.

At step B3, a non-fallback DCI operation. For example, a size of a DCI format 0_1 corresponding to an SUL is aligned with a size of a DCI format 0_1 corresponding to a non-SUL, which may be called DCI size alignment of format 0_1 SUL/non SUL.

At step B4, a URLLC correspond to a DCI operation. For example, a size of a DCI format 0_2 corresponding to the SUL is aligned with a size of a DCI format 0_2 corresponding to the non-SUL, which may be called DCI size alignment of format 0_2 SUL/non SUL.

At step B5, it is determined whether a second preset condition is met (for example, for legacy DCI). The second preset condition includes that the number of DCI size categories of scrambled DCI by a C-RNTI for the terminal in a serving cell is less than or equal to 3, and it is determined whether the number of DCI size categories configured for the terminal in the serving cell is less than or equal to 4. In case that the second preset condition is met, a DCI alignment process may be ended. In case that the second preset condition is not met, a next step is entered (step B6).

It should be noted that, at the step B6 and each step after the step B6, there needs to determine again whether the second preset condition is met, that is, the number of DCI size categories of the scrambled DCI by the C-RNTI for the terminal in the serving cell is less than or equal to 4, and it is determined whether the number of DCI size categories configured for the terminal in the serving cell is less than or equal to 5. In case that the second preset condition is met, the DCI alignment process may be ended; and in case that the second preset condition is not met, a next step is entered. In order to simplify the description, the text part is not repeated here, and only illustrated in the FIG. 8.

At step B6, a detailed operation of aligning the size of the DCI format 0_0/1_0 in the USS with the size of the DCI format 0_0/1_0 in the CSS is the same as the detailed operation at step A6 above, which is not repeated here.

Step B6 may be called DCI size alignment of DCI format 0_0/1_0 in USS and DCI format 0_0/1_0 in CSS.

At step B6', a size of a DCI format 0_3 is aligned with a size of a DCI format 1_3, which may be called DCI alignment size of DCI format 0_3/1_3, an alignment way be the same as that shown in FIG. 7, which is not repeated here.

At step B7, a size of a DCI format 0_2 is aligned with a size of a DCI format 1_2, which may be called DCI size alignment of DCI format 0_2/1_2.

At step B8, a size of a DCI format 0_1 is aligned with a size of a DCI format 1_1, which may be called DCI size alignment of DCI format 0_1/1_1.

In an embodiment, the first DCI and the second DCI, such as the DCI format 0_3 and/or the DCI format 1_3, are DCI for scheduling data of multiple cells, and the first DCI and the second DCI are DCI formats added newly with respect to DCI for scheduling data of a single cell. In order to minimize an impact on a legacy DCI format, such as, reduce the impact on the DCI format 0_2, the DCI format 1_2, the DCI format 0_1 and the DCI format 1_1,

in an embodiment, it may be determined first that the size of the DCI format 0_2 and the size of the DCI format 1_2 are aligned, and then determined that the size of the DCI format 0_3 and the size of the DCI format 1_3 are aligned.

Since there needs to determine whether the first preset condition above is met after determining that the size of the DCI format 0_3 and the size of the DCI format 1_3 are aligned, and an alignment process may be ended in case that the first preset condition above is met, there is no need to determine that the size of the DCI format 0_2 and the size of the DCI format 1_2 are aligned. However, it is further determined that the size of the DCI format 0_2 and the size of the DCI format 1_2 are aligned in case that the first preset condition above is not met.

That is, after it is determined that the size of the DCI format 0_3 and the size of the DCI format 1_3 are aligned, there is a possibility that there is no need to determine that the size of the DCI format 0_2 and the size of the DCI format 1_2 are aligned, thus reducing the impact on the legacy DCI format such as the DCI format 0_2, DCI format 1_2, and the like.

In an embodiment, the method also includes

not expecting that the number of DCI size categories received in the serving cell is greater than 5; and
not expecting that the number of DCI size categories of scrambled DCI by an RNTI and received in the serving cell is greater than 4.

With the alignment operation in the above embodiments, it may be ensured that the number of DCI size categories received by the terminal in the serving cell is not more than 5 (i.e., less than or equal to 5), and the number of DCI size categories of the scrambled DCI by the C-RNTI received by the terminal in the serving cell is not more than 4 (i.e., less than or equal to 4), such that the terminal performs blind detection on the DCI in the serving cell based on the condition that the number of DCI size categories is not more than 5 and the number of DCI size categories of the scrambled DCI by the C-RNTI is not more than 4, thus meeting a requirement of 4+1" and reducing the complexity of blind detection of the terminal.

The RNTI includes, but not limited to, a C-RNTI and an RNTI defined newly.

In all embodiments of the disclosure, the network device may set specific indication fields in different DCI to indicate the DCI format, for example, indicating that the DCI is the DCI (such as, the legacy DCI) for scheduling the data of the single cell, or the DCI newly added (such as, the DCI format 0_3 and the DCI format 1_3).

The network device may also scramble different DCI through different RNTIs. For example, the DCI for scheduling the data of the single cell may be scrambled by the C-RNTI, and the DCI for scheduling the data of the multiple cells may be scrambled by an RNTI defined newly (such as an MCS-RNTI), or an RNTI (such as, a CS-RNTI, an SP-CSI-RNTI, or an MCS-C-RNTI) other than the C-RNTI.

Accordingly, the terminal may distinguish the DCI based on the RNTI scrambling the DCI. For example, in case that the RNTI scrambling the DCI is determined to be the C-RNTI, it may be determined that the DCI scrambled by the C-RNTI is used to schedule the data of the single cell. For example, in case that the RNTI scrambling the DCI is determined to be the MCS-RNTI, it may be determined that the DCI scrambled by the MCS-RNTI is used to schedule the data of the multiple cells.

In an embodiment, the method also includes:

in case that at least one PDCCH candidate of a DCI format 0_2 corresponding to a first USS and a DCI format 0_3 corresponding to a second USS is mapped to the same resource, the terminal does not expect that a size of the DCI format 0_2 corresponding to the first USS is the same as a size of the DCI format 0_3; and
in case that at least one PDCCH candidate of a DCI format 1_2 corresponding to the first USS and a DCI format 1_3 corresponding to the second USS is mapped to the same resource, the terminal does not expect that a size of the DCI format 1_2 corresponding to the first USS is the same as a size of the DCI format 1_3.

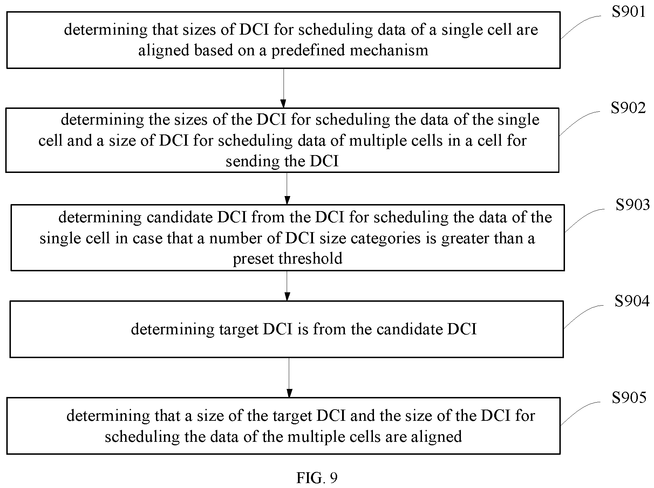

FIG. 9 is a flow chart illustrating a method for a DCI size alignment according to an embodiment of the disclosure. As illustrated in FIG. 9, the method for the DCI size alignment may include the following.

At block S901, it is determined that sizes of DCI (multiple legacy DCI such as a DCI format 0_1, a DCI format 1_1, and the like) for scheduling data of a single cell are aligned based on a predefined mechanism.

At block S902, the sizes of the DCI for scheduling the data of the single cell and a size of DCI for scheduling data of multiple cells in a cell for sending the DCI are determined.

At block S903, candidate DCI is determined from the DCI for scheduling the data of the single cell in case that a number of DCI size categories is greater than a preset threshold.

At block S904, target DCI is determined from the candidate DCI.

At block S905, it is determined that a size of the target DCI and the size of the DCI for scheduling the data of the multiple cells are aligned.

In an embodiment, the DCI for scheduling the data of the single cell may be a legacy DCI. For example, the DCI for scheduling the data of the single cell includes at least one of:

a DCI format 0_0, a DCI format 1_0, a DCI format 0_1, a DCI format 1_1, a DCI format 0_2, or a DCI format 1_2.

The predefined mechanism may be to reuse an existing mechanism, such as a Sec 7.3.1 TS38.212 [1] mechanism.

In an embodiment, a DCI format for scheduling the data of the multiple cells may be set to be different from a legacy DCI format for scheduling the data of the single cell, or may be set to be the same as the legacy DCI format for scheduling the data of the single cell. In the following, the technical solution of the disclosure may be described for an example in the case that the DCI format for scheduling the data of the multiple cells is different from the legacy DCI format for scheduling the data of the single cell.

The DCI for scheduling the data of the single cell is only included in the art generally. Since the size of the DCI for scheduling the data of the multiple cells may be different from the size of the DCI for scheduling the data of the single cell after the DCI for scheduling the data of the multiple cells is added newly, there may be still the large number of DCI size categories in a serving cell (for example, the cell where the terminal receives the DCI for scheduling the data of the multiple cells and the DCI for scheduling the data of the single cell) after determining the size alignment of the DCI for scheduling the data of the single cell based on the predefined mechanism, for example, the number of the DCI size categories is greater than the preset threshold, which causes a high complexity of blind detection on the DCI by the terminal.

According to embodiments of the disclosure, in case that the number of DCI size categories in the serving cell is greater than the preset threshold, the candidate DCI (such as one or more DCI) may be determined from the DCI for scheduling the data of the single cell. Then target DCI (such as, one DCI) may be determined from the candidate DCI, and it may be determined that the size of the target DCI and the size of the DCI for scheduling the data of the multiple cells are aligned. In this way, the number of DCI size categories received by the terminal in the serving cell may be reduced, which is beneficial to reducing the complexity of blind detection on the DCI by the terminal.

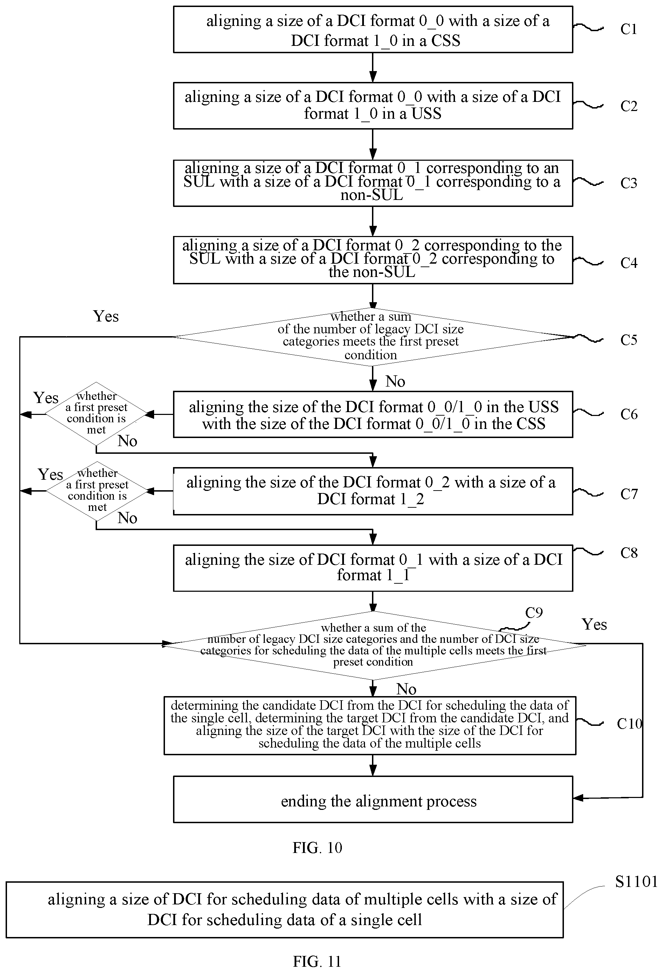

FIG. 10 is a flow chart illustrating a method for a DCI size alignment according to another embodiment of the disclosure. As illustrated in FIG. 10, the method for the DCI size alignment may include the following.

At step C1, a size of a DCI format 0_0 is aligned with a size of a DCI format 1_0 in a CSS, which may be called DCI size alignment of DCI format 0_0 and DCI format 1_0 in CSS.

At step C2, a size of a DCI format 0_0 is aligned with a size of a DCI format 1_0 in a USS, which may be called DCI size alignment of DCI format 0_0 and DCI format 1_0 in USS.

At step C3, a non-fallback DCI operation. For example, a size of a DCI format 0_1 corresponding to an SUL is aligned with a size of a DCI format 0_1 corresponding to a non-SUL, which may be called DCI size alignment of format 0_1 SUL/non SUL.

At step C4, a URLLC correspond to a DCI operation. For example, a size of a DCI format 0_2 corresponding to the SUL is aligned with a size of a DCI format 0_2 corresponding to the non-SUL, which may be called DCI size alignment of format 0_2 SUL/non SUL.

At step C5, it is determined whether a legacy DCI meets a first preset condition. The first preset condition includes that the number of legacy DCI size categories of scrambled DCI by a C-RNTI for the terminal in a serving cell is less than or equal to 3, and it is determined whether the number of legacy DCI size categories configured for the terminal in the serving cell is less than or equal to 4. In case that the first preset condition is met, the process may be entered to step C9. In case that the first preset condition is not met, a next step (step C6) is entered.

It should be noted that, at step C6 and step C7, there needs to determine again whether the legacy DCI meets the first preset condition, that is, the number of legacy DCI size categories of the scrambled DCI by the C-RNTI for the terminal in the serving cell is less than or equal to 3, and it is determined whether the number of legacy DCI size categories configured for the terminal in the serving cell is less than or equal to 4. In case that the first preset condition is met, the process may be entered to step C9; and in case that the first preset condition is not met, the next step is entered. In order to simplify the description, the text part is not repeated here, and only illustrated in the FIG. 10.

At step C6, the operation of aligning the size of the DCI format 0_0/1_0 in the USS with the size of the DCI format 0_0/1_0 in the CSS may be the same as step A6 above, which is not repeated here.

Step C6 may be called DCI size alignment of DCI format 0_0/1_0 in USS and DCI format 0_0/1_0 in CSS.

At step C7, a size of the DCI format 0_2 is aligned with a size of a DCI format 1_2, which may be called DCI size alignment of DCI format 0_2/1_2.

At step C8, a size of DCI format 0_1 is aligned with a size of a DCI format 1_1, DCI size alignment of DCI format 0_1/1_1, and then step C9 may be entered.

At step C9, it is determined whether a sum of the number of legacy DCI size categories and the number of DCI size categories for scheduling the data of the multiple cells meets the first preset condition, that is, the sum of the number of legacy DCI size categories and the number of DCI size categories of the scrambled DCI by the C-RNTI for scheduling the data of the multiple cells in the serving cell is less than or equal to 3, and the sum of the number of legacy DCI size categories and the number of DCI size categories for scheduling the data of the multiple cells in the serving cell is less than or equal to 4. In case that the first preset condition is met, the process is ended; and in case that the first preset condition is not met, the next step (step C10) is entered.

At step C10, candidate DCI is determined from the DCI for scheduling the data of the single cell, target DCI is determined from the candidate DCI, and a size of the target DCI is aligned with a size of DCI for scheduling the data of the multiple cells, and then the DCI alignment process may be ended.

In addition, in embodiments illustrated in FIG. 10, the step of determining whether the first preset condition is met may also be adjusted as needed to the step of determining whether the second preset condition is met. In this case, it may be ensured that a "4+1" requirement is met.

In an embodiment, determining the target DCI from the candidate DCI includes:
determining DCI with a maximum size from the candidate DCI as the target DCI.

DCI with a size lower than a size of the DCI for scheduling the data of the multiple cells in the DCI for scheduling data of the single cell is determined as the candidate DCI. For example, the step C9 above includes: determining DCI (the candidate DCI) with a size lower than a size of a DCI format 0_3/ DCI format 1_3, performing an operation such as a zero padding, increasing a reserved state, or the like on DCI (target DCI) with a maximum size determined from the candidate DCI, and aligning a size of the DCI with the maximum size with the size of the DCI format 0_3/ DCI format 1_3.

In the DCI for scheduling the data of the single cell, the DCI with the size lower than the size of the DCI for scheduling the data of the multiple cells may be determined as the candidate DCI, and then the DCI with the maximum size in the candidate DCI may be determined as the target DCI. Since the target DCI is the DCI with the maximum size in the candidate DCI, which is the closest to the DCI for scheduling the data of the multiple cells, there may need relatively few bits to be supplemented for the target DCI when the size of the target DCI is aligned with the size of the DCI for scheduling the data of the multiple cells, thus an impact on a transmission performance of the PDCCH is relatively small after the alignment.

In an embodiment, determining the target DCI from the candidate DCI includes:
determining DCI with a minimum size from the candidate DCI as the target DCI.

DCI with a size greater than a size of the DCI for scheduling the data of the multiple cells in the DCI for scheduling the data of the single cell is determined as the candidate DCI. For example, the step C9 above includes: determining DCI (the candidate DCI) with a size greater than a size of a DCI format 0_3/ DCI format 1_3, performing an operation such as the zero padding, increasing the reserved state and the like on the DCI format 0_3/ DCI format 1_3; and aligning the size of the DCI format 0_3/ DCI format 1_3 with a size of DCI (target DCI) with a minimum size determined from the candidate DCI.

In the DCI for scheduling the data of the single cell, the DCI with the size greater than the size of the DCI for scheduling the data of the multiple cells may be determined as the candidate DCI, and then the DCI with the minimum size in the candidate DCI may be determined as the target DCI. Since the target DCI is the DCI with the minimum size in the candidate DCI, which is the closest to the DCI for scheduling the data of the multiple cells, there needs relatively few bits to be supplemented for the DCI for the data of the multiple cells when the size of the target DCI is aligned with the size of the DCI for scheduling the data of the multiple cells, which has relatively low impact on the transmission performance of the PDCCH after the alignment.

In an embodiment, the DCI for scheduling the data of the multiple cells may include first DCI for scheduling uplink data of the multiple cells and second DCI for scheduling downlink data of the multiple cells. For example, the DCI for scheduling the data of the multiple cells may be set to include a DCI format 0_3 and/or a DCI format 1_3, where the first DCI is the DCI format 0_3 for scheduling the uplink data of the multiple cells, and the second DCI is the DCI format 1_3 for scheduling the downlink data of the multiple cells.

It should be noted that the DCI for scheduling the data of the multiple cells may also be used to schedule the data of the single cell in some cases. A format of the first DCI may be the same as or different from a format of the second DCI. Exemplary description may be made below mainly in case that the format of the first DCI is different from the format of the second DCI.

In an embodiment, the method also includes:
determining that a size of the first DCI and a size of the second DCI are aligned, before determining that the size of the target DCI and the size of the DCI for scheduling the data of the multiple cells are aligned.

In an embodiment, before determining the size of the DCI for scheduling the data of the single cell and the size of the DCI for scheduling the data of the multiple cells in a cell for sending the DCI, it may be determined that the size of the first DCI and the size of the second DCI are aligned in case that the size of the first DCI is different from the size of the second DCI and the first preset condition above is not met.

In case that the size of the first DCI is different from the size of the second DCI, and the first preset condition above is not met, it is determined that the size of the first DCI and the size of the second DCI are aligned before determining that the size of the target DCI and the size of the DCI for scheduling the data of the multiple cells are aligned. Since the size of the first DCI is relatively close to the size of the second DCI in general, there needs to supplement relatively few bits when it is determined that the size of the first DCI and the size of the second DCI are aligned. Moreover, after the size of the first DCI is aligned with the size of the second DCI, in case that the first preset condition or the second preset condition is met, the size of the target DCI does not need to be aligned with the size of the DCI for scheduling the data of the multiple cells, thus further reducing an impact on a PDCCH transmission.

Therefore, it may be determined first that the size of the first DCI and the size of the second DCI are aligned. In this way, determining that the size of the target DCI and the size of the first DCI are aligned has the same effect as determining that the size of the target DCI and the size of the second DCI are aligned, such that not only the number of DCI size categories is reduced, but also the process of using the size of the target DCI to align with size of the DCI for scheduling the data of the multiple cells is simplified.

In an embodiment, the method also includes

not expecting that a number of DCI size categories received in a serving cell is greater than 4; and
not expecting that a number of DCI size categories of scrambled DCI by a C-RNTI) and received in the serving cell is greater than 3.

With the alignment operation in the above embodiments, it may be ensured that the number of DCI size categories received by the terminal in the serving cell is not more than 4 (i.e., less than or equal to 4), and the number of DCI size categories of the scrambled DCI by the C-RNTI received by the terminal in the serving cell is not more than 3 (i.e., less than or equal to 3), such that the terminal performs blind detection on the DCI in the serving cell based on the condition that the number of DCI size categories received is not more than 4 and the number of DCI size categories of the scrambled DCI by the C-RNTI is not more than 3, thus meeting a requirement of "3+1" and reducing the complexity of blind detection of the terminal..

In all embodiments of the disclosure, the network device may set specific indication fields in different DCI to indicate the DCI format, for example, indicating that the DCI is the DCI (such as, the legacy DCI) for scheduling the data of the single cell, or the DCI newly added (such as, the DCI format 0_3 and the DCI format 1_3).

The network device may also scramble different DCI through different RNTIs. For example, the DCI for scheduling the data of the single cell may be scrambled by the C-RNTI, and the DCI for scheduling the data of the multiple cells may be scrambled by an RNTI defined newly (such as an MCS-RNTI), or an RNTI (such as, a CS-RNTI, an SP-CSI-RNTI, or an MCS-C-RNTI) other than the C-RNTI.

Accordingly, the terminal may distinguish the DCI based on the RNTI scrambling the DCI. For example, in case that the RNTI scrambling the DCI is determined to be the C-RNTI, it may be determined that the DCI scrambled by the C-RNTI is used to schedule the data of the single cell. For example, in case that the RNTI scrambling the DCI is determined to be the MCS-RNTI, it may be determined that the DCI scrambled by the MCS-RNTI is used to schedule the data of the multiple cells.

In an embodiment, the method also includes:

in case that at least one PDCCH candidate of a DCI format 0_2 corresponding to a first USS and a DCI format 0_3 corresponding to a second USS is mapped to the same resource, the terminal does not expect that a size of the DCI format 0_2 corresponding to the first USS is the same as a size of the DCI format 0_3; and

in case that at least one PDCCH candidate of a DCI format 1_2 corresponding to the first USS and a DCI format 1_3 corresponding to the second USS is mapped to the same resource, the terminal does not expect that a size of the DCI format 1_2 corresponding to the first USS is the same as a size of the DCI format 1_3.

Embodiments provide several methods for the DCI size alignment. The methods for the DCI size alignment may be applied to a network device. The terminal includes, but not limited to, a communication device such as a mobile phone, a tablet, a wearable device, a sensor, an Internet of Thing device and the like. The terminal may communicate with the network device. The network device includes, but not limited to, a network device in 4G, 5G, 6G and other communication systems, such as a base station and a core network.

FIG. 11 is a flow chart illustrating a method for a DCI size alignment according to an embodiment of the disclosure. As illustrated in FIG. 11, the method for the DCI size alignment may include the following.

At block S1101, a size of DCI for scheduling data of multiple cells is aligned with a size of DCI for scheduling data of a single cell.

In an embodiment, the DCI for scheduling the data of the single cell may be legacy DCI. For example, the DCI for scheduling the data of the single cell includes at least one of:

a DCI format 0_0, a DCI format 1_0, a DCI format 0_1, a DCI format 1_1, a DCI format 0_2, or a DCI format 1_2.

In an embodiment, a DCI format for scheduling the data of the multiple cells may be set to be different from a legacy DCI format for scheduling the data of the single cell, or may be set to be the same as the legacy DCI format for scheduling the data of the single cell. Description is made below to the technical solution of the disclosure for example, mainly in the case that the DCI format for scheduling the data of the multiple cells is different from the legacy DCI format for scheduling the data of the single cell.

In an embodiment, the DCI for scheduling the data of the multiple cells may include first DCI for scheduling uplink data of the multiple cells and second DCI for scheduling downlink data of the multiple cells. For example, the DCI for scheduling the data of the multiple cells may be set to include a DCI format 0_3 and/or a DCI format 1_3. The first DCI is the DCI format 0_3 for scheduling the uplink data of the multiple cells, and the second DCI is the DCI format 1_3 for scheduling the downlink data of the multiple cells.

It should be noted that the DCI for scheduling the data of the multiple cells may also be used to schedule the data of the single cell in some cases. A format of the first DCI may be the same as or different from a format of the second DCI. Exemplary description may be made below mainly in case that the format of the first DCI is different from the format of the second DCI.

The DCI for scheduling the data of the single cell is only included in the art generally, and the size of the DCI for scheduling the data of the multiple cells may be different from the size of the DCI for scheduling the data of the single cell after the DCI for scheduling the data of the multiple cells is added newly, which may cause increasing the number of DCI size categories received by the terminal in the serving cell, thus increasing the complexity of blind detection on the DCI by the terminal.

According to embodiments of the disclosure, the network device may align the size of the DCI for scheduling the data of the multiple cells with the size of the DCI for scheduling the data of the single cell, thus reducing the number of DCI size categories received by the terminal in the serving cell when the DCI is sent to the terminal in the serving cell, which is beneficial to reducing the complexity of blind detection on the DCI by the terminal.

In an embodiment, the detailed execution actions of the method for the DCI size alignment may be as illustrated in FIG. 2, which are not repeated here.

In an embodiment, a size of the first DCI is aligned with a size of the second DCI before the size of the DCI for scheduling the data of the multiple cells is aligned with the size of the DCI for scheduling the data of the single cell.

Before the size of the DCI for scheduling the data of the multiple cells is aligned with the size of the DCI for scheduling the data of the single cell, it may be determined that the size of the first DCI is aligned with the second DCI first in case that the size of the first DCI is different from the size of the second DCI.

After the size of the first DCI is aligned with the size of the second DCI, it may be determined that a first preset condition is met. In case that the first preset condition is met, subsequent alignment operations may be not performed, for example, there is no need to align the size of the DCI for scheduling the data of the multiple cells with the size of the DCI for scheduling the data of the single cell. In case that the first preset condition is not met, the subsequent alignment operation may be performed continuously, for example, the size of the DCI for scheduling the data of the multiple cells is aligned with the size of data DCI for scheduling the data of the single cell.

In an embodiment, aligning the size of the first DCI with the size of the second DCI includes: aligning the size of the first DCI with the size of the second DCI after aligning a size of the DCI format 0_1 with a size of the DCI format 1_1.

Since the size of the first DCI and/or the second DCI, such as a size of the DCI format 0_3 and/or a size of the DCI format 1_3, is relatively large (that is, occupying the relatively large number of bits), aligning the size of the DCI format 0_3 with the size of the DCI format 1_3 needs to supplement the relatively large number of bits (for example, to supplement the DCI format 0_3 or the DCI format 1_3). However, the relatively large number of bits occupy a large amount of communication resources, which may reduce a transmission efficiency of a PDCCH where the DCI is located.

In an embodiment, the size of the DCI format 0_1 may be aligned with the size of the DCI format 1_1 first, and then the size of the DCI format 0_3 is aligned with the size of the DCI format 1_3.

Since there needs to determine whether the first preset condition above is met after the size of the DCI format 0_1 is aligned with the size of the DCI format 1_1, and the alignment process may be ended in case that the first preset condition above is met, there is no need to align the size of the DCI format 0_3 with the size of the DCI format 1_3. However, the size of the DCI format 0_3 is further aligned with the size of the DCI format 1_3 in case that the first preset condition above is not met.

That is, after the size of the DCI format 0_1 may be aligned with the size of the DCI format 1_1, there is a possibility that there is no need to align the size of the DCI format 0_3 with the size of the DCI format 1_3, which may alleviate the problem that the transmission efficiency of the PDCCH is reduced due to the large number of supplementary bits to some extent.

In an embodiment, aligning the size of the first DCI with the size of the second DCI includes: aligning the size of the first DCI with the size of the second DCI before aligning a size of the DCI format 0_2 with a size of the DCI format 1_2.

The first DCI and the second DCI, such as the DCI format 0_3 and/or the DCI format 1_3, are the DCI for scheduling the data of the multiple cells, and the first DCI and the second DCI are DCI formats added newly with respect to the DCI for scheduling the data of the single cell. In order to reduce an impact on the legacy DCI format as much as possible, for example, reduce an impact on the DCI format 0_2, the DCI format 1_2, the DCI format 0_1 and the DCI format 1_1,

in an embodiment, the size of the DCI format 0_2 is aligned with the size of the DCI format 1_2 first, and then the size of the DCI format 0_3 is aligned with the size of the DCI format 1_3.

There needs to determine whether the first preset condition above is met after the size of the DCI format 0_3 is aligned with the size of the DCI format 1_3. The alignment process is ended in case that the first preset condition is met, and there is no need to align the size of the DCI format 0_2 with the size of the DCI format 1_2. The size of the DCI format 0_2 is further aligned with the size of the DCI format 1_2 merely in case that the first preset condition is not met

That is, the size of the DCI format 0_3 is aligned with the size of the DCI format 1_3 is determined first, and there is a possibility that there is no need to align the size of the DCI format 0_2 with the size of the DCI format 1_2, thus reducing the impact on the legacy DCI format such as the DCI format 0_2 and the DCI format 1_2.

According to embodiments of the disclosure, it may be ensured that the number of DCI size categories sent DCI by the network device to the terminal in the serving cell is not more than 4 (i.e., less than or equal to 4), and the number of DCI size categories of scrambled DCI by the C-RNTI and sent through the network device to the terminal in the serving cell is not more than 3 (i.e., less than or equal to 3), such that the terminal performs blind detection on the DCI in the serving cell based on a condition that the number of DCI size categories is not more than 4 and the number of DCI size categories of the scrambled DCI by the C-RNTI is not more than 3, thus meeting a requirement of "3+1" and reducing the complexity of blind detection of the terminal..

In an embodiment, the method also includes:

in case that at least one PDCCH candidate of a DCI format 0_2 corresponding to a first USS and a DCI format 0_3 corresponding to a second USS is mapped to the same resource, the network device may set that a size of the DCI format 0_2 corresponding to the first USS is different from a size of the DCI format 0_3; and
in case that at least one PDCCH candidate of a DCI format 1_2 corresponding to the first USS and a DCI format 1_3 corresponding to the second USS is mapped to the same resource, the network device may set that a size of the DCI format 1_2 corresponding to the first USS is different from a size of the DCI format 1_3.

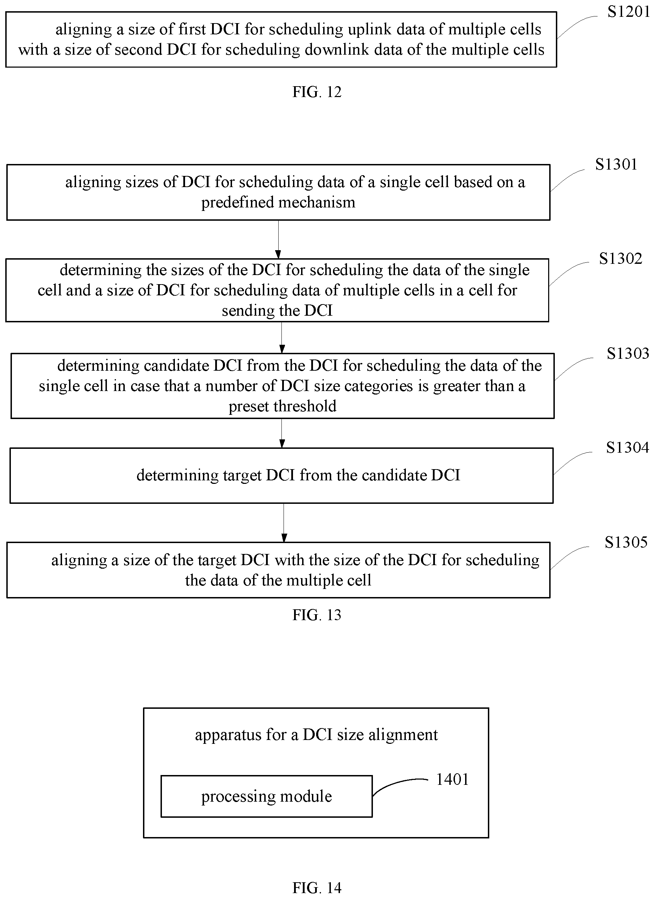

FIG. 12 is a flow chart illustrating a method for a DCI size alignment according to an embodiment of the disclosure. As illustrated in FIG. 12, the method for the DCI size alignment may include the following.

At block S1201, a size of first DCI for scheduling uplink data of multiple cells is aligned with a size of second DCI for scheduling downlink data of the multiple cells.

In an embodiment, the DCI for scheduling the data of the single cell may be legacy DCI. For example, the DCI for scheduling the data of the single cell includes at least one of:

a DCI format 0_0, a DCI format 1_0, a DCI format 0_1, a DCI format 1_1, a DCI format 0_2, or a DCI format 1_2.

It should be noted that, the legacy DCI includes, but not limited to, the DCI format 0_1, the DCI format 1_1, the DCI format 0_2, the DCI format 1_2, the DCI format 0_0, the DCI format 1_0, and the like.

In an embodiment, a DCI format for scheduling the data of the multiple cells may be set to be different from a legacy DCI format for scheduling the data of the single cell, or may be set to be the same as the legacy DCI format for scheduling the data of the single cell. Exemplary description may be made below to the technical solution of the disclosure mainly in the case that the DCI format for scheduling the data of the multiple cells is different from the legacy DCI format for scheduling the data of the single cell.

In an embodiment, the DCI for scheduling the data of the multiple cells may include first DCI for scheduling uplink data of the multiple cells and second DCI for scheduling downlink data of the multiple cells. For example, the DCI for scheduling the data of the multiple cells may be set to include a DCI format 0_3 and/or a DCI format 1_3. The first DCI is the DCI format 0_3 for scheduling the uplink data of the multiple cells, and the second DCI is the DCI format 1_3 for scheduling the downlink data of the multiple cells.

The DCI for scheduling the data of the single cell is merely included in the art generally. Therefore, after the first DCI for scheduling the uplink data of the multiple cells and the second DCI for scheduling the downlink data of the multiple cells are added newly, and the size of the first DCI may be different from the size of the second DCI, it may be caused that the number of size categories of received DCI by the terminal in a serving cell (such as, a cell for sending the DCI for scheduling the data of the multiple cells and the DCI for scheduling the data of the single cell) is increased, thus increasing the complexity of blind detection on the DCI by the terminal.

According to embodiments of the disclosure, the network device may align the size of the first DCI for scheduling the uplink data of the multiple cells with the size of the second DCI for scheduling the downlink data of the multiple cells, thus reducing the number of size categories of the received DCI by the terminal in the serving cell when the DCI is sent to the terminal in the serving cell, which is beneficial to reducing the complexity of blind detection on the DCI by the terminal.

In an embodiment, aligning the size of the first DCI with the size of the second DCI includes: aligning the size of the first DCI with the size of the second DCI after aligning a size of a DCI format 0_1 with a size of a DCI format 1_1, and the detailed alignment process may be referred to FIG. 7, which is not repeated here.

Since the size of the first DCI and/or the second DCI, such as a size of the DCI format 0_3 and/or a size of the DCI format 1_3, is relatively large (that is, occupying the relatively large number of bits), aligning the size of the DCI format 0_3 with the size of the DCI format 1_3 needs to supplement the relatively large number of bits (for example, to supplement the DCI format 0_3 or the DCI format 1_3). However, the relatively large number of bits occupy a large amount of communication resources, which may reduce a transmission efficiency of a PDCCH where the DCI is located.

In an embodiment, the size of the DCI format 0_1 is aligned with the size of the DCI format 1_1 first, and then the size of the DCI format 0_3 is aligned with the size of the DCI format 1_3 is determined.

Since there needs to determine whether the first preset condition above is met after the size of the DCI format 0_1 is aligned with the size of the DCI format 1_1, and the alignment process may be ended in case that the first preset condition above is met, there is no need to align the size of the DCI format 0_3 with the size of the DCI format 1_3. However, the size of the DCI format 0_3 is further aligned with the size of the DCI format 1_3 in case that the first preset condition above is not met.

That is, the size of the DCI format 0_1 is aligned with the size of the DCI format 1_1 first, and there is a possibility that there is no need to align the size of the DCI format 0_3 with the size of the DCI format 1_3, which may alleviate the problem that the transmission efficiency of the PDCCH is reduced due to the large number of supplemented bits to some extent.

In an embodiment, aligning the size of the first DCI with the size of the second DCI includes: aligning the size of the first DCI with the size of the second DCI before aligning the size of the DCI format 0_2 with the size of the DCI format 1_2. The detailed aligning process may be illustrated in FIG. 8, which is not repeated here.

In an embodiment, since the first DCI and the second DCI, such as the DCI format 0_3 and/or the DCI format 1_3, are DCI for scheduling the data of the multiple cells, the first DCI and the second DCI are DCI formats added newly with respect to the DCI for scheduling the data of the single cell. In order to minimize the impact on the legacy DCI format, such as, reduce the impact on the DCI format 0_2, the DCI format 1_2, the DCI format 0_1 and the DCI format 1_1,

in an embodiment, the size of the DCI format 0_2 may be aligned with the size of the DCI format 1_2 first, and then the size of the DCI format 0_3 is aligned with the size of the DCI format 1_3.

Since there needs to determine whether the first preset condition above is met after the size of the DCI format 0_3 is aligned with the DCI format 1_3 is determined, and the alignment process may be ended in case that the first preset condition above is met, there is no need to align the size of the DCI format 0_2 with the size of the DCI format 1_2. However, the size of the DCI format 0_2 is further aligned with the size of the DCI format 1_2 in case that the first preset condition above is not met.

That is, is the size of the DCI format 0_3 is aligned with the size of the DCI format 1_3 first, and there is a possibility that there is no need to align the size of the DCI format 0_2 with the size of the DCI format 1_2, thus reducing the impact on the legacy DCI format such as the DCI format 0_2, DCI format 1_2, and the like.

With the alignment operation in the above embodiments, it may be ensured that the number of DCI size categories sent by the network device to the terminal in the serving cell is not more than 5 (i.e., less than or equal to 5), and the number of DCI size categories of scrambled DCI by the C-RNTI sent by the network device to the terminal in the serving cell is not more than 4 (i.e., less than or equal to 4), such that the terminal performs blind detection on the DCI in the serving cell based on a condition that the number of DCI size categories is not more than 5 and the number of DCI size categories of the scrambled DCI by the C-RNTI is not more than 4, thus meeting a requirement of 4+1" and reducing the complexity of blind detection of the terminal.

In an embodiment, the method also includes:

in case that at least one PDCCH candidate of a DCI format 0_2 corresponding to a first USS and a DCI format 0_3 corresponding to a second USS is mapped to the same resource, the network device may set that a size of the DCI format 0_2 corresponding to the first USS is different from a size of the DCI format 0_3; and
in case that at least one PDCCH candidate of a DCI format 1_2 corresponding to the first USS and a DCI format 1_3 corresponding to the second USS is mapped to the same resource, the network device may set that a size of the DCI format 1_2 corresponding to the first USS is different from a size of the DCI format 1_3.

FIG. 13 is a flow chart illustrating a method for a DCI size alignment according to an embodiment of the disclosure. As illustrated in FIG. 13, the method for the DCI size alignment may include the following.

At block S1301, sizes of DCI for scheduling data of a single cell based are aligned on a predefined mechanism.

At block S1302, the sizes of the DCI for scheduling the data of the single cell and a size of DCI for scheduling data of multiple cells in a cell for sending the DCI are determined

At block S1303, candidate DCI is determined from the DCI for scheduling the data of the single cell in case that a number of size categories is greater than a preset threshold.

At block S1304, target DCI is determined from the candidate DCI.

At block S1305, a size of the target DCI is aligned with the size of the DCI for scheduling the data of the multiple cells.

In an embodiment, the DCI for scheduling the data of the single cell may be a legacy DCI. For example, the DCI for scheduling the data of the single cell includes at least one of:

a DCI format 0_0, a DCI format 1_0, a DCI format 0_1, a DCI format 1_1, a DCI format 0_2, or a DCI format 1_2.

The predefined mechanism may be to reuse an existing mechanism, such as a Sec 7.3.1 TS38.212 [1] mechanism.

In an embodiment, a DCI format for scheduling the data of the multiple cells may be set to be different from a legacy DCI format for scheduling the data of the single cell, or may be set to be the same as the legacy DCI format for scheduling the data of the single cell. In the following, the technical solution of the disclosure may be described for an example in the case that the DCI format for scheduling the data of the multiple cells is different from the legacy DCI format for scheduling the data of the single cell.

The DCI for scheduling the data of the single cell is only included in the art generally. Since the size of the DCI for scheduling the data of the multiple cells may be different from the size of the DCI for scheduling the data of the single cell after the DCI for scheduling the data of the multiple cells is added newly, there may be still the large number of DCI size categories in a serving cell (for example, a cell where the terminal receives the DCI for scheduling the data of the multiple cells and the DCI for scheduling the data of the single cell) after the sizes of the DCI for scheduling the data of the single cell are aligned based on the predefined mechanism, for example, the number of the DCI size categories is greater than the preset threshold, which causes a high complexity of blind detection on the DCI by the terminal.

According to embodiments of the disclosure, in case that the number of DCI size categories in the serving cell is greater than the preset threshold, the network device may determine the candidate DCI (such as one or more DCI) from the DCI for scheduling the data of the single cell. Then target DCI (such as, one DCI) may be determined from the candidate DCI, and the size of the target DCI may be aligned with the size of the DCI for scheduling the data of the multiple cells. In this way, the number of DCI size categories received by the terminal in the serving cell may be reduced when the network device sends the DCI to the terminal in the serving cell, which is beneficial to reducing the complexity of blind detection on the DCI by the terminal.

The detail actions of the method for the DCI size alignment illustrated in embodiments of the disclosure may be as illustrated in FIG. 10, which is not repeated here.

In an embodiment, determining the target DCI from the candidate DCI includes: determining DCI with a maximum size from the candidate DCI as the target DCI, in which DCI with a size lower than a size of the DCI for scheduling the data of the multiple cells in the DCI for scheduling the data of the single cell is determined as the candidate DCI.

In the DCI for scheduling the data of the single cell, the DCI with the size lower than the size of the DCI for scheduling the data of the multiple cells may be determined as the candidate DCI, and then the DCI with the maximum size in the candidate DCI may be determined as the target DCI. Since the target DCI is the DCI with the maximum size in the candidate DCI, which is the closest to the DCI for scheduling the data of the multiple cells, there may need relatively few bits to be supplemented for the target DCI when the size of the target DCI is aligned with the size of the DCI for scheduling the data of the multiple cells, thus an impact on a transmission performance of the PDCCH is relatively small after the alignment.

In an embodiment, determining the target DCI from the candidate DCI includes: determining DCI with a minimum size from the candidate DCI as the target DCI, in which DCI with a size greater than a size of the DCI for scheduling the data of the multiple cells in the DCI for scheduling the data of the single cell is taken the candidate DCI.

In the DCI for scheduling the data of the single cell, the DCI with the size greater than the size of the DCI for scheduling the data of the multiple cells may be determined as the candidate DCI, and then the DCI with the minimum size in the candidate DCI may be determined as the target DCI. Since the target DCI is the DCI with the minimum size in the candidate DCI, which is the closest to the DCI for scheduling the data of the multiple cells, there needs relatively few bits to be supplemented for the DCI for the data of the multiple cells when the size of the target DCI is aligned with the size of the DCI for scheduling the data of the multiple cells, which has relatively low impact on the transmission performance of the PDCCH after the alignment.

In an embodiment, the DCI for scheduling the data of the multiple cells may include first DCI for scheduling uplink data of the multiple cells and second DCI for scheduling downlink data of the multiple cells. For example, the DCI for scheduling the data of the multiple cells may be set to include a DCI format 0_3 and/or a DCI format 1_3. The first DCI is the DCI format 0_3 for scheduling the uplink data of the multiple cells, and the second DCI is the DCI format 1_3 for scheduling the downlink data of the multiple cells.

In an embodiment, the method also includes: a size of the first DCI is aligned with a size of the second DCI before aligning the size of the target DCI with the size of the DCI for scheduling the data of the multiple cells.

In an embodiment, before determining the size of the DCI for scheduling the data of the single cell and the size of the DCI for scheduling the data of the multiple cells in a cell for sending the DCI, the size of the first DCI may be aligned with the size of the second DCI first in case that the size of the first DCI is different from the size of the second DCI, and the first preset condition above is not met.

In case that the size of the first DCI is different from the size of the second DCI, and the first preset condition above is not met, the size of the first DCI is aligned with the size of the second DCI before the size of the target DCI is aligned with the size of the DCI for scheduling the data of the multiple cells, and the size of the first DCI is relatively close to the size of the second DCI in general, thus there needs to supplement relatively few bits when the size of the first DCI is aligned with the size of the second DCI. Moreover, after the size of the first DCI is aligned with the size of the second DCI, the size of the target DCI does not need to be aligned with the size of the DCI for scheduling the data of the multiple cells in case that the first preset condition or the second preset condition is met, thus further reducing an impact on a PDCCH transmission.

Therefore, the size of the first DCI may be aligned with the size of the second DCI first. In this way, aligning the size of the target DCI with the size of the first DCI has the same effect as aligning the size of the target DCI with the size of the second DCI, such that not only the number of DCI size categories is reduced, but also the process of using the size of the target DCI to align with the size of the DCI for scheduling the data of the multiple cells is simplified.

According to embodiments of the disclosure, it may be ensured that the number of DCI size categories sent by the network device to the terminal in the serving cell is not more than 4 (i.e., less than or equal to 4), and the number of DCI size categories of scrambled DCI by the C-RNTI sent by the network device to the terminal in the serving cell is not more than 3 (i.e., less than or equal to 3), such that the terminal performs blind detection on the DCI in the serving cell based on the condition that the number of DCI size categories is not more than 4 and the number of DCI size categories of the scrambled DCI by the C-RNTI is not more than 3, thus meeting a requirement of "3+1" and reducing the complexity of blind detection of the terminal..

In an embodiment, the method also includes:

in case that at least one PDCCH candidate of a DCI format 0_2 corresponding to a first USS and a DCI format 0_3 corresponding to a second USS is mapped to the same resource, the network device may set that a size of the DCI format 0_2 corresponding to the first USS is different from a DCI size of the DCI format 0_3; and
in case that at least one PDCCH candidate of a DCI format 1_2 corresponding to the first USS and a DCI format 1_3 corresponding to the second USS is mapped to the same resource, the network device may set that a size of the DCI format 1_2 corresponding to the first USS is different from a size of the DCI format 1_3.

Corresponding to the above embodiments of the method for the DCI size alignment, the disclosure also provides an embodiment of an apparatus for a DCI size alignment.

Embodiments provide several apparatuses for the DCI size alignment. The apparatuses for the DCI size alignment may be applied to a terminal. The terminal includes, but not limited to, a communication device such as a mobile phone, a tablet, a wearable device, a sensor, an Internet of Thing device and the like. The terminal may communicate with a network device. The network device includes, but not limited to, a network device in 4G, 5G, 6G and other communication systems, such as a base station and a core network.

FIG. 14 is a block diagram illustrating an apparatus for a DCI size alignment according to an embodiment of the disclosure. As illustrated in FIG. 14, the apparatus for the DCI size alignment may include:

a processing module 1401, configured to determine that a size of DCI for scheduling data of multiple cells and a size of DCI for scheduling data of a single cell are aligned.

In an embodiment, the DCI for scheduling the data of the multiple cells includes first DCI for scheduling uplink data of the multiple cells and second DCI for scheduling downlink data of the multiple cells.

In an embodiment, the processing module is also configured to determine that a size of the first DCI and a size of the second DCI are aligned, before determining that the size of the DCI for scheduling the data of the multiple cells and the size of the DCI for scheduling the data of the single cell are aligned.

In an embodiment, the processing module is configured to determine that the size of the first DCI and the size of the second DCI are aligned, after determining that a size of a DCI format 0_1 and a size of a DCI format 1_1 are aligned.

In an embodiment, the processing module is configured to determine that the size of the first DCI and a size of the second DCI are aligned, before determining that a size of a DCI format 0_2 and a size of a DCI format 1_2 are aligned.

In an embodiment, the processing module is also configured to not expect that a number of DCI size categories received in a serving cell is greater than four; and not expect that a number of DCI size categories of scrambled DCI by a C-RNTI and received in the serving cell is greater than three.

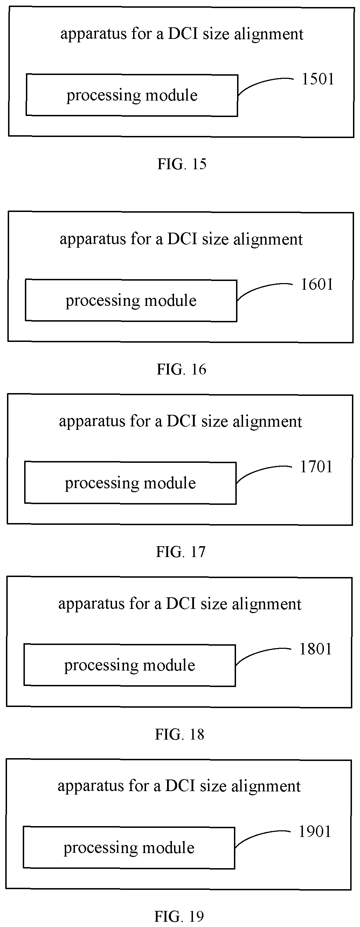

FIG. 15 is a block diagram illustrating an apparatus for a DCI size alignment according to an embodiment of the disclosure. As illustrated in FIG. 15, the apparatus for the DCI size alignment may include:

a processing module 1501, configured to determine that a size of first DCI for scheduling uplink data of multiple cells and a size of second DCI for scheduling downlink data of multiple cells are aligned.

In an embodiment, the processing module is also configured to determine that the size of the first DCI and the size of the second DCI are aligned, after determining that a size of a DCI format 0_1 and a size of a DCI format 1_1 are aligned.

In an embodiment, the processing module is configured to determine that the size of the first DCI and the size of the second DCI are aligned, before determining that a size of a DCI format 0_2 and a size of a DCI format 1_2 are aligned.

In an embodiment, the processing module is configured to not expect that a number of DCI size categories received in a serving cell is greater than five; and not expect that a number of DCI size categories of scrambled DCI by a RNTI and received in the serving cell is greater than four.

FIG. 16 is a block diagram illustrating an apparatus for a DCI size alignment according to an embodiment of the disclosure. As illustrated in FIG. 16, the apparatus for the DCI size alignment may include:

a processing module 1601, configured to determine that sizes of DCI for scheduling data of a single cell are aligned based on a predefined mechanism; to determine the sizes of the DCI for scheduling the data of the single cell and a size of DCI for scheduling data of multiple cells in a cell for sending DCI; to determine candidate DCI from the DCI for scheduling the data of the single cell in case that a number of DCI size categories is greater than a preset threshold; to determine target DCI from the candidate DCI; and to determine a size alignment of the target DCI and the DCI for scheduling the data of the multiple cells.

In an embodiment, the processing module is configured to determine DCI with a maximum size from the candidate DCI as the target DCI, in which DCI with a size lower than a size of the DCI for scheduling the data of the multiple cells in the DCI for scheduling data of the single cell is determined as the candidate DCI.

In an embodiment, the processing module is configured to determine DCI with a minimum size from the candidate DCI as the target DCI, in which DCI with a size greater than a size of the DCI for scheduling the data of the multiple cells in the DCI for scheduling the data of the single cell is determined the candidate DCI.

In an embodiment, the DCI for scheduling the data of the multiple cells includes first DCI for scheduling uplink data of the multiple cells and second DCI for scheduling downlink data of the multiple cells.

In an embodiment, the processing module is also configured to determine that a size of the first DCI and a size of the second DCI are aligned, before determining that the size of the target DCI and the size of the DCI for scheduling the data of the multiple cells are aligned.

In an embodiment, the processing module is also configured to not expect that a number of DCI size categories received in a serving cell is greater than four; and not expect that a number of DCI size categories of scrambled DCI by a cell-radio network temporary identifier (C-RNTI) and received in the serving cell is greater than three.

Embodiments provide several apparatuses for a DCI size alignment. The apparatuses for the DCI size alignment may be applied to a network device. The terminal includes, but not limited to, a communication device such as a mobile phone, a tablet, a wearable device, a sensor, an Internet of Thing device and the like. The terminal may communicate with the network device. The network device includes, but not limited to, a network device in 4G, 5G, 6G and other communication systems, such as a base station and a core network.

FIG. 17 is a block diagram illustrating an apparatus for a DCI size alignment according to an embodiment of the disclosure. As illustrated in FIG. 17, the apparatus for the DCI size alignment may include:

a processing module 1701, configured to align a size of DCI for scheduling data of multiple cells with a size of DCI for scheduling data of a single cell.

In an embodiment, the DCI for scheduling the data of the multiple cells includes first DCI for scheduling multiple cell uplink data and second DCI for scheduling multiple cell downlink data.

In an embodiment, the processing module is also configured to align a size of the first DCI with a size of the second DCI before aligning the size of the DCI for scheduling the data of the multiple cells with the size of the DCI for scheduling the data of the single cell.

In an embodiment, the processing module is also configured to align the size of the first DCI with the size of the second DCI after aligning a size of a DCI format 0_1 with a size of a DCI format 1_1.

In an embodiment, the processing module is also configured to align the size of the first DCI with the size of the second DCI before aligning a size of a DCI format 0_2 with a size of a DCI format 1_2.

FIG. 18 is a block diagram illustrating an apparatus for a DCI size alignment according to an embodiment of the disclosure. As illustrated in FIG. 18, the apparatus for the DCI size alignment may include:

a processing module 1801, configured to align a size of first DCI for scheduling uplink data of multiple cells with a size of second DCI for scheduling downlink data of the plurality of cells.

In an embodiment, the processing module is configured to align the size of the first DCI with the size of the second DCI after aligning a size of a DCI format 0_1 with a size of a DCI format 1_1.

In an embodiment, the processing module is configured to align the size of the first DCI with the size of the second DCI before aligning a size of a DCI format 0_2 with a size of a DCI format 1_2.

FIG. 19 is a block diagram illustrating an apparatus for a DCI size alignment according to an embodiment of the disclosure. As illustrated in FIG. 19, the apparatus for the DCI size alignment may include:

a processing module 1901, configured to align sizes of DCI for scheduling data of a single cell based on a predefined mechanism; to determine the sizes of the DCI for scheduling the data of the single cell and a size of DCI for scheduling data of multiple cells in a cell for sending the DCI; to determine candidate DCI from the DCI for scheduling the data of the single cell in case that a number of DCI size categories is greater than a preset threshold; to determining target DCI from the candidate DCI; and to align a size of the target DCI with the size of the DCI for scheduling the data of the multiple cells.

In an embodiment, the processing module is configured to determine DCI with a maximum size from the candidate DCI as the target DCI, in which DCI with a size lower than a size of the DCI for scheduling the data of the multiple cells in the DCI for scheduling the data of the single cell is determined as the candidate DCI.

In an embodiment, the processing module is configured to determine DCI with a minimum size from the candidate DCI as the target DCI, in which DCI with a size greater than a size of the DCI for scheduling the data of the multiple cells in the DCI for scheduling the data of the single cell is determined the candidate DCI.

In an embodiment, the DCI for scheduling the data of the multiple cells includes first DCI for scheduling uplink data of the multiple cells and second DCI for scheduling downlink data of the multiple cells.

In an embodiment, the processing module is also configured to align a size of the first DCI with a size of the second DCI before aligning the size of the target DCI with the size of the DCI for scheduling the data of the multiple cells.

With regard to the apparatus in the above embodiments, the detailed way of each module performing operations has been described in detail in the embodiments of the related method, which is not described in detail here.

Since the apparatus embodiments basically correspond to the method embodiments, it is only necessary to refer to a partial description of the method embodiments for the relevant points. The apparatus embodiments described above are only schematic, in which the module described as a separate component may or may not be physically separated, and a component displayed as the module may or may not be a physical module, that is, may be located in one place or distributed to multiple network modules. Some or all of the modules may be selected based on an actual requirement to achieve the purpose of the solution in the embodiments. The ordinary skilled in the art may understand and implement the embodiments without creative labor.

Embodiments of the disclosure also provide a communication device, including a processor; and a memory for storing a computer program. When the computer program is executed by the processor, the method for the DCI size alignment applied to the terminal described in any of the above embodiments is realized.

Embodiments of the disclosure also provide a communication device, including a processor; and a memory for storing a computer program. When the computer program is executed by the processor, the method for the DCI size alignment applied to the network device described in any of the above embodiments is realized.

Embodiments of the disclosure also provide a computer-readable storage medium for storing a computer program. When the computer program is executed by a processor, the method for the DCI size alignment applied to the terminal described in any of the above embodiments is realized.

Embodiments of the disclosure also provide a computer-readable storage medium for storing a computer program. When the computer program is executed by a processor, the method for the DCI size alignment applied to the network device described in any of the above embodiments is realized.

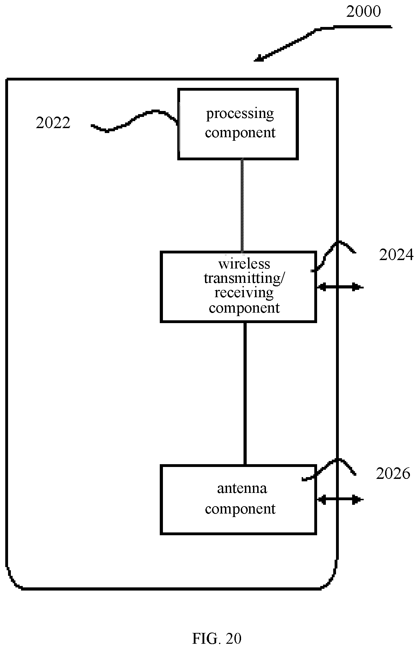

As illustrated in FIG. 20, FIG. 20 is a block diagram illustrating a device 2000 for a DCI size alignment according to an embodiment of the disclosure. The device 2000 may be provided as a base station. Referring to FIG. 20, the device 2000 includes a processing component 2022, a wireless transmitting/receiving component 2024, an antenna component 2026, and a signal processing part unique to a wireless interface. The processing component 2022 may further include one or more processors. One processor in the processing component 2022 may be configured to implement the method for the DCI size alignment applied to the network device described in any of the above embodiments.

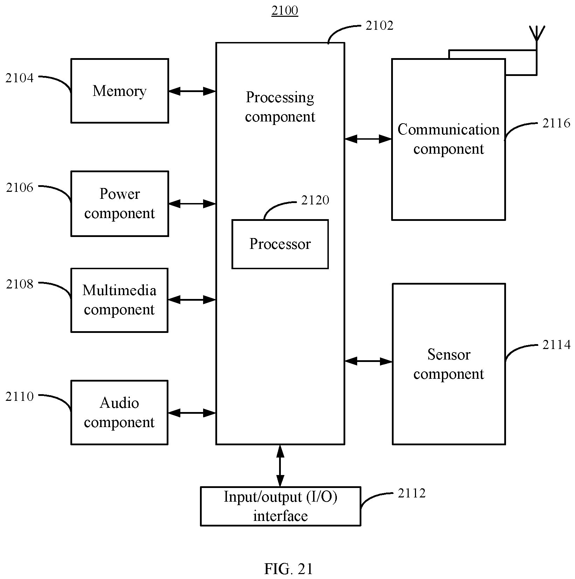

FIG. 21 is a block diagram illustrating a device 2100 for a DCI size alignment according to an embodiment of the disclosure. For example, the device 2100 may be a mobile phone, a computer, a digital broadcasting terminal, a message sending and receiving device, a game controller, a tablet, a medical device, a fitness equipment, a personal digital assistant or the like.

Referring to FIG. 21, the device 2100 may include one or more of the following components: a processing component 2102, a memory 2104, a power component 2106, a multimedia component 2108, an audio component 2110, an input/output (I/O) interface 2112, a sensor component 2114, and a communication component 2116.

The processing component 2102 typically controls overall operations of the device 2100, such as the operations associated with display, telephone calls, data communications, camera operations, and recording operations. The processing component 2102 may include one or more processors 2120 to execute instructions to perform all or part of the steps in the above described methods for the DCI size alignment. Moreover, the processing component 2102 may include one or more modules which facilitate the interaction between the processing component 2102 and other components. For example, the processing component 2102 may include a multimedia module to facilitate the interaction between the multimedia component 2108 and the processing component 2102.

The memory 2104 is configured to store various types of data to support the operation of the device 2100. Examples of such data include instructions for any applications or methods operated on the device 2100, contact data, phonebook data, messages, pictures, video, etc. The memory 2104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2106 provides power to various components of the device 2100. The power component 2106 may include a power management system, one or more power sources, and any other components associated with the generation, management, and distribution of power in the device 2100.

The multimedia component 2108 includes a screen providing an output interface between the device 2100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a waken-up period and a pressure associated with the touch or swipe action. In some embodiments, the multimedia component 2108 includes a front camera and/or a rear camera. The front camera and the rear camera may receive an external multimedia datum while the device 2100 is in an operation mode, such as a photographing mode or a video mode. Each of the front camera and the rear camera may be a fixed optical lens system or have focus and optical zoom capability.

The audio component 2110 is configured to output and/or input audio signals. For example, the audio component 2110 includes a microphone (MIC) configured to receive an external audio signal when the device 2100 is in an operation mode, such as a call mode, a recording mode, and a speech recognition mode. The received audio signal may be further stored in the memory 2104 or sent via the communication component 2116. In some embodiments, the audio component 2110 further includes a speaker to output audio signals.

The I/O interface 2112 provides an interface between the processing component 2102 and peripheral interface modules, such as a keyboard, a click wheel, buttons, and the like. The buttons may include, but be not limited to, a home button, a volume button, a start button, and a locking button.

The sensor component 2114 includes one or more sensors to provide status assessments of various aspects of the device 2100. For example, the sensor component 2114 may detect an open/closed status of the device 2100, relative location of components, e.g., the display and the keypad of the device 2100, a change in location of the device 2100 or a component of the device 2100, a presence or absence of user contact with the device 2100, an orientation or an acceleration/deceleration of the device 2100, and a change in temperature of the device 2100. The sensor component 2114 may include a proximity sensor configured to detect the presence of nearby objects without any physical contact. The sensor component 2114 may also include a light sensor, such as a CMOS or CCD image sensor, for use in imaging applications. In some embodiments, the sensor component 2114 may also include an accelerometer sensor, a gyroscope sensor, a magnetic sensor, a pressure sensor, or a temperature sensor.

The communication component 2116 is configured to facilitate communication, wired or wirelessly, between the device 2100 and other devices. The device 2100 may access a wireless network based on a communication standard, such as Wi-Fi, 2G, or 3G, or a combination thereof. In an exemplary embodiment, the communication component 2116 receives a broadcast signal or broadcast related information from an external broadcast management system via a broadcast channel. In an exemplary embodiment, the communication component 2116 also includes a near field communication (NFC) module to facilitate short-range communications. For example, the NFC module may be implemented based on a radio frequency identification (RFID) technology, an infrared data association (IrDA) technology, an ultrawideband (UWB) technology, a Bluetooth (BT) technology, and other technologies.

In one or more exemplary embodiments, the device 2100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods for the DCI size alignment applied to the terminal in any of the above embodiments.

Corresponding to the above method embodiments, embodiments of the disclosure also provide a non-transitory computer readable storage medium including instructions, such as a memory 2104 including instructions. When the instructions are executed by the processor 2120 of the device 2100, the method for the DCI size alignment applied to the terminal in any embodiment above is implemented. For example, the non-transitory computer readable storage medium may be a ROM, a random access memory (RAM), a CD-ROM (compact disc read-only memory), a magnetic tape, a floppy disk, an optical data storage device, etc.

Other implementations of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exaction construction that has been described above and illustrated in the accompanying drawings, and that various modifications and changes may be made without departing from the scope thereof. It is intended that the scope of the disclosure only be limited by the appended claims.

It should be noted that in this application, relational terms such as first and second are merely used to distinguish one entity or operation from another entity or operation, and do not necessarily require or imply that there is any such actual relationship or order between these entities or operations. Terms "include", "including", or any other variations thereof are intended to cover a non-exclusive inclusion, such that the process, the method, the product or the device including a series of elements not only includes those elements, but also includes other elements not listed explicitly, or also includes elements inherent in the process, the method, the product or the device. Without more restrictions, for the element defined by the sentence "including one......", it is not excluded that there are other same elements in the process, the method, the product or the device including the element.

The method and apparatus according to embodiments of the disclosure are described in detail above. In the disclosure, detailed examples are applied to explain the principle and the implementations of the disclosure. The description of the above embodiments is only used to help understand the method and the core ideas of the disclosure. Meanwhile, for those skilled in the art, based on the idea of the disclosure, any change may be made in the detailed implementation and the application scope. In conclusion, the contents of the disclosure should not be construed as limiting the disclosure.

**Claims**

1. A method for a downlink control information (DCI) size alignment, applied to a terminal, comprising: determining that a size of DCI for scheduling data of a plurality of cells and a size of DCI for scheduling data of a single cell are aligned.

2. The method of claim 1, wherein the DCI for scheduling the data of the plurality of cells comprises first DCI for scheduling uplink data of the plurality of cells and second DCI for scheduling downlink data of the plurality of cells.

3. The method of claim 2, further comprising: determining that a size of the first DCI and a size of the second DCI are aligned, before determining that the size of the DCI for scheduling the data of the plurality of cells and the size of the DCI for scheduling the data of the single cell are aligned.

4. The method of claim 3, wherein determining that the size of the first DCI and the size of the second DCI are aligned comprises: determining that the size of the first DCI and the size of the second DCI are aligned, after determining that a size of a DCI format 0_1 and a size of a DCI format 1_1 are aligned.

5. The method of claim 3, wherein determining that the size of the first DCI and the size of the second DCI are aligned comprises: determining that the size of the first DCI and the size of the second DCI are aligned, before determining that a size of a DCI format 0_2 and a size of a DCI format 1_2 are aligned.

6. The method of any of claims 1 to 5, further comprising:

   not expecting that a number of DCI size categories received in a serving cell is greater than four; and
   not expecting that a number of DCI size categories of scrambled DCI by a cell-radio network temporary identifier (C-RNTI) and received in the serving cell is greater than three.

7. A method for a downlink control information (DCI) size alignment, applied to a terminal, comprising: determining that a size of first DCI for scheduling uplink data of a plurality of cells and a size of second DCI for scheduling downlink data of a plurality of cells are aligned.

8. The method of claim 7, wherein determining that the size of the first DCI and the size of the second DCI are aligned comprises: determining that the size of the first DCI and the size of the second DCI are aligned, after determining that a size of a DCI format 0_1 and a size of a DCI format 1_1 are aligned.

9. The method of claim 7, wherein determining that the size of the first DCI and the size of the second DCI are aligned comprises: determining that the size of the first DCI and the size of the second DCI are aligned, before determining that a size of a DCI format 0_2 and a size of a DCI format 1_2 are aligned.

10. The method of any of claims 7 to 9, further comprising:

    not expecting that a number of DCI size categories received in a serving cell is greater than five; and
    not expecting that a number of DCI size categories of scrambled DCI by a radio network temporary identifier (RNTI) and received in the serving cell is greater than four.

11. A method for a downlink control information (DCI) size alignment, applied to a terminal, comprising:

> determining that sizes of DCI for scheduling data of a single cell are aligned based on a predefined mechanism;
> determining the sizes of the DCI for scheduling the data of the single cell and a size of DCI for scheduling data of a plurality of cells in a cell for sending the DCI;
> determining candidate DCI from the DCI for scheduling the data of the single cell in case that a number of DCI size categories is greater than a preset threshold;
> determining target DCI from the candidate DCI; and
> determining that a size of the target DCI and the size of the DCI for scheduling the data of the plurality of cells are aligned.

12. The method of claim 11, wherein determining the target DCI from the candidate DCI comprises:

> determining DCI with a maximum size from the candidate DCI as the target DCI,
> wherein DCI with a size lower than a size of the DCI for scheduling the data of the plurality of cells in the DCI for scheduling data of the single cell is determined as the candidate DCI.

13. The method of claim 11, wherein determining the target DCI from the candidate DCI comprises:

> determining DCI with a minimum size from the candidate DCI as the target DCI,
> wherein DCI with a size greater than a size of the DCI for scheduling the data of the plurality of cells in the DCI for scheduling the data of the single cell is determined as the candidate DCI.

14. The method of claim 11, wherein the DCI for scheduling the data of the plurality of cells comprises first DCI for scheduling uplink data of the plurality of cells and second DCI for scheduling downlink data of the plurality of cells.

15. The method of claim 14, further comprising:
determining that a size of the first DCI and a size of the second DCI are aligned, before determining that the size of the target DCI and the size of the DCI for scheduling the data of the plurality of cells are aligned.

16. The method of any of claims 11 to 15, further comprising:

> not expecting that a number of DCI size categories received in a serving cell is greater than four; and

> not expecting that a number of DCI size categories of scrambled DCI by a cell-radio network temporary identifier (C-RNTI) and received in the serving cell is greater than three.

17. A method for a downlink control information (DCI) size alignment, applied to a network device, comprising:
aligning a size of DCI for scheduling data of a plurality of cells with a size of DCI for scheduling data of a single cell.

18. The method of claim 17, wherein the DCI for scheduling the data of the plurality of cells comprises first DCI for scheduling a plurality of cell uplink data and second DCI for scheduling a plurality of cell downlink data.

19. The method of claim 18, further comprising:
aligning a size of the first DCI with a size of the second DCI before aligning the size of the DCI for scheduling the data of the plurality of cells with the size of the DCI for scheduling the data of the single cell.

20. The method of claim 19, wherein aligning the size of the first DCI with the size of the second DCI comprises:
aligning the size of the first DCI with the size of the second DCI after aligning a size of a DCI format 0_1 with a size of a DCI format 1_1.

21. The method of claim 19, wherein aligning the size of the first DCI with the size of the second DCI comprises:
aligning the size of the first DCI with the size of the second DCI before aligning a size of a DCI format 0_2 with a size of a DCI format 1_2.

22. A method for a downlink control information (DCI) size alignment, applied to a network device, comprising:
aligning a size of first DCI for scheduling uplink data of a plurality of cells with a size of second DCI for scheduling downlink data of the plurality of cells.

23. The method of claim 22, wherein aligning the size of the first DCI with the size of the second DCI comprises:
aligning the size of the first DCI with the size of the second DCI after aligning a size of a DCI format 0_1 with a size of a DCI format 1_1.

24. The method of claim 22, wherein aligning the size of the first DCI with the size of the second DCI comprises:
aligning the size of the first DCI with the size of the second DCI before aligning a size of a DCI format 0_2 with a size of a DCI format 1_2.

25. A method for a downlink control information (DCI) size alignment, applied to a network device, comprising:

aligning sizes of DCI for scheduling data of a single cell based on a predefined mechanism; determining the sizes of the DCI for scheduling the data of the single cell and a size of DCI for scheduling data of a plurality of cells in a cell for sending the DCI; determining candidate DCI from the DCI for scheduling the data of the single cell in case that a number of DCI size categories is greater than a preset threshold; determining target DCI from the candidate DCI; and aligning a size of the target DCI with the size of the DCI for scheduling the data of the plurality of cells.

26. The method of claim 25, wherein determining the target DCI from the candidate DCI comprises:

determining DCI with a maximum size from the candidate DCI as the target DCI, wherein DCI with a size lower than a size of the DCI for scheduling the data of the plurality of cells in the DCI for scheduling the data of the single cell is determined as the candidate DCI.

27. The method of claim 25, wherein determining the target DCI from the candidate DCI comprises:

determining DCI with a minimum size from the candidate DCI as the target DCI, wherein DCI with a size greater than a size of the DCI for scheduling the data of the plurality of cells in the DCI for scheduling the data of the single cell is determined as the candidate DCI.

28. The method of claim 25, wherein the DCI for scheduling the data of the plurality of cells comprises first DCI for scheduling uplink data of the plurality of cells and second DCI for scheduling downlink data of the plurality of cells.

29. The method of claim 28, further comprising: aligning a size of the first DCI with a size of the second DCI before aligning the size of the target DCI with the size of the DCI for scheduling the data of the plurality of cells.

30. An apparatus for a downlink control information (DCI) size alignment, applied to a terminal, comprising:
a processing module, configured to determine that a size of DCI for scheduling data of a plurality of cells and a size of DCI for scheduling data of a single cell are aligned.

31. An apparatus for a downlink control information (DCI) size alignment, applied to a terminal, comprising:
a processing module, configured to determine that a size of first DCI for scheduling uplink data of a plurality of cells and a size of second DCI for scheduling downlink data of a plurality of cells are aligned.

32. An apparatus for a downlink control information (DCI) size alignment, applied to a terminal, comprising:
a processing module, configured to determine that sizes of DCI for scheduling data of a single cell are aligned based on a predefined mechanism; to determine a size of DCI for scheduling data of the single cell and a size of DCI for scheduling data of a plurality of cells in a cell for sending the DCI; to determine candidate DCI from the DCI for scheduling the data of the single cell in case that a number of DCI size categories is greater than a preset threshold; to determine target DCI from the candidate DCI; and to determine that a size of the target DCI and the size of the DCI for scheduling the data of the plurality of cells are aligned.

33. An apparatus for a downlink control information (DCI) size alignment, applied to a network device, comprising:
a processing module, configured to align a size of DCI for scheduling data of a plurality of cells with a size of DCI for scheduling data of a single cell.

34. An apparatus for a downlink control information (DCI) size alignment, applied to a network device, comprising:
a processing module, configured to align a size of first DCI for scheduling uplink data of a plurality of cells with a size of second DCI for scheduling downlink data of a plurality of cells.

35. An apparatus for a downlink control information (DCI) size alignment, applied to a network device, comprising:
a processing module, configured to align sizes of DCI for scheduling data of a single cell based on a predefined mechanism; to determine the sizes of the DCI for scheduling the data of the single cell and a size of DCI for scheduling data of a plurality of cells in a cell for sending the DCI; to determine candidate DCI from the DCI for scheduling the data of the single cell in case that a number of DCI size categories is greater than a preset threshold; to determine target DCI from the candidate DCI; and to align a size of the target DCI with the size of the DCI for scheduling the data of the plurality of cells.

36. A communication device, comprising:

   a processor; and
   a memory, configured to store a computer program;
   wherein, when the computer program is executed by the processor, the method for the DCI size alignment of any one of claims 1 to 16 is realized.

37. A communication device, comprising:

   a processor; and
   a memory, configured to store a computer program;
   wherein, when the computer program is executed by the processor, the method for the DCI size alignment of any one of claims 17 to 25 is realized.

38. A computer-readable storage medium for storing a computer program, wherein when the computer program is executed by a processor, actions in the method for the DCI size alignment of any one of claims 1 to 16 are realized.

39. A computer-readable storage medium for storing a computer program, wherein when the computer program is executed by a processor, actions in the method for the DCI size alignment of any one of claims 17 to 25 are realized.

determining that a size of DCI for scheduling data of multiple cells and a size of DCI for scheduling data of a single cell are aligned ⟋ S101

FIG. 1

aligning a size of a DCI format 0_0 with a size of a DCI format 1_0 in a common search space (CSS) ～ A1

aligning a size of a DCI format 0_0 with a size of a DCI format 1_0 in a user equipment (UE) specific search space (USS) ～ A2

aligning a size of a DCI format 0_1 corresponding to a supplemented uplink (SUL) with a size of a DCI format 0_1 corresponding to a non-SUL ～ A3

aligning a size of a DCI format 0_2 corresponding to the SUL with a size of a DCI format 0_2 corresponding to the non-SUL ～ A4

Yes

whether a first preset condition is met ～ A5

No

Yes — whether a first preset condition is met — No

aligning the size of the DCI format 0_0/1_0 in the USS with the size of the DCI format 0_0/1_0 in the CSS ～ A6

Yes — whether a first preset condition is met — No

aligning the size of the DCI format 0_2 with a size of a DCI format 1_2 ～ A7

Yes — whether a first preset condition is met — No

aligning the size of DCI format 0_1 with a size of a DCI format 1_1 ～ A8

aligning the size of DCI format 0_1/1_1 with a size of a DCI format 0_3/1_3 ～ A9

ending the alignment process

FIG. 2

determining that a size of first DCI and a size of second DCI are aligned — S301

determining that a size of DCI for scheduling data of multiple cells and a size of DCI for scheduling data of a single cell are aligned — S101

FIG. 3

aligning a size of a DCI format 0_0 with a size of a DCI format 1_0 in a CSS — A1

aligning a size of a DCI format 0_0 with a size of a DCI format 1_0 in a USS — A2

aligning a size of a DCI format 0_1 corresponding to an SUL with a size of a DCI format 0_1 corresponding to a non-SUL — A3

aligning a size of a DCI format 0_2 corresponding to the SUL with a size of a DCI format 0_2 corresponding to the non-SUL — A4

Yes

whether a first preset condition is met — A5

No

Yes

whether a first preset condition is met

aligning the size of the DCI format 0_0/1_0 in the USS with the size of the DCI format 0_0/1_0 in the CSS — A6

No

Yes

whether a first preset condition is met

aligning the size of the DCI format 0_2 with a size of a DCI format 1_2 — A7

No

Yes

whether a first preset condition is met

aligning the size of DCI format 0_1 with a size of a DCI format 1_1 — A8

No

Yes

whether a first preset condition is met

aligning a size of first DCI with a size of second DCI

No

aligning the size of DCI format 0_1/1_1 with a size of a DCI format 0_3/1_3 — A9

ending the alignment process

FIG. 4

aligning a size of a DCI format 0_0 with a size of a DCI format 1_0 in a CSS  — A1

aligning a size of a DCI format 0_0 with a size of a DCI format 1_0 in a USS  — A2

aligning a size of a DCI format 0_1 corresponding to an SUL with a size of a DCI format 0_1 corresponding to a non-SUL  — A3

aligning a size of a DCI format 0_2 corresponding to the SUL with a size of a DCI format 0_2 corresponding to the non-SUL  — A4

Yes

whether a first preset condition is met  — A5

No

whether a first preset condition is met — Yes

No

aligning the size of the DCI format 0_0/1_0 in the USS with the size of the DCI format 0_0/1_0 in the CSS  — A6

whether a first preset condition is met — Yes

No

aligning a size of first DCI with a size of second DCI

whether a first preset condition is met — Yes

No

aligning the size of the DCI format 0_2 with a size of a DCI format 1_2  — A7

whether a first preset condition is met — Yes

No

aligning the size of DCI format 0_1 with a size of a DCI format 1_1  — A8

aligning the size of DCI format 0_1/1_1 with a size of a DCI format 0_3/1_3  — A9

ending the alignment process

FIG. 5

determining that a size of first DCI for scheduling uplink data of multiple cells and a size of second DCI for scheduling downlink data of multiple cells are aligned  — S601

FIG. 6

```
┌─────────────────────────────────────────┐
│ aligning a size of a DCI format 0_0 with a size of a │   B1
│         DCI format 1_0 in a CSS          │
└─────────────────────────────────────────┘
                    │
                    ▼
┌─────────────────────────────────────────┐
│ aligning a size of a DCI format 0_0 with a size of a DCI │   B2
│         format 1_0 in a USS              │
└─────────────────────────────────────────┘
                    │
                    ▼
┌─────────────────────────────────────────┐
│ aligning a size of a DCI format 0_1 corresponding to an │   B3
│ SUL with a size of a DCI format 0_1 corresponding to a │
│                non-SUL                   │
└─────────────────────────────────────────┘
                    │
                    ▼
┌─────────────────────────────────────────┐
│ aligning a size of a DCI format 0_2 corresponding to the │   B4
│ SUL with a size of a DCI format 0_2 corresponding to │
│             the non-SUL                  │
└─────────────────────────────────────────┘
                    │
                    ▼
        Yes
              whether
           a first preset                      B5
          condition is met
                    │ No
                    ▼
         whether      ┌─────────────────────────────────────────┐
   Yes  a first preset│ aligning the size of the DCI format 0_0/1_0 in the USS │  B6
        condition is  │ with the size of the DCI format 0_0/1_0 in the CSS │
           met        └─────────────────────────────────────────┘
                No         │
                           ▼
         whether      ┌─────────────────────────────────────────┐
   Yes  a first preset│ aligning the size of the DCI format 0_2 with a size of a │  B7
        condition is  │         DCI format 1_2                   │
           met        └─────────────────────────────────────────┘
                No         │
                           ▼
         whether      ┌─────────────────────────────────────────┐
   Yes  a first preset│ aligning the size of DCI format 0_1 with a size of a DCI │  B8
        condition is  │         format 1_1                       │
           met        └─────────────────────────────────────────┘
                No         │
                           ▼
                     ┌─────────────────────────────────────────┐
                     │ aligning the size of DCI format 0_3 with a size of a DCI │  B9
                     │         format 1_3                       │
                     └─────────────────────────────────────────┘
                           │
                           ▼
                     ┌─────────────────────────────────────────┐
                     │          ending the alignment process    │
                     └─────────────────────────────────────────┘
```

FIG. 7

aligning a size of a DCI format 0_0 with a size of a DCI format 1_0 in a CSS — B1

aligning a size of a DCI format 0_0 with a size of a DCI format 1_0 in a USS — B2

aligning a size of a DCI format 0_1 corresponding to an SUL with a size of a DCI format 0_1 corresponding to a non-SUL — B3

aligning a size of a DCI format 0_2 corresponding to the SUL with a size of a DCI format 0_2 corresponding to the non-SUL — B4

Yes ← whether a first preset condition is met — B5

No

aligning the size of the DCI format 0_0/1_0 in the USS with the size of the DCI format 0_0/1_0 in the CSS — B6

Yes ← whether a first preset condition is met ← No

aligning the size of the DCI format 0_3 with the size of the DCI format 1_3 — B6'

Yes ← whether a first preset condition is met ← No

aligning the size of the DCI format 0_2 with a size of a DCI format 1_2 — B7

Yes ← whether a first preset condition is met ← No

aligning the size of DCI format 0_1 with a size of a DCI format 1_1 — B8

ending the alignment process

FIG. 8

```
┌────────────────────────────────────────────────────────────────┐       S901
│   determining that sizes of DCI for scheduling data of a single cell are │
│              aligned based on a predefined mechanism                      │
└────────────────────────────────────────────────────────────────┘

┌────────────────────────────────────────────────────────────────┐       S902
│   determining the sizes of the DCI for scheduling the data of the single  │
│   cell and a size of DCI for scheduling data of multiple cells in a cell for │
│                         sending the DCI                                    │
└────────────────────────────────────────────────────────────────┘

┌────────────────────────────────────────────────────────────────┐       S903
│   determining candidate DCI from the DCI for scheduling the data of the   │
│   single cell in case that a number of DCI size categories is greater than a │
│                         preset threshold                                  │
└────────────────────────────────────────────────────────────────┘

┌────────────────────────────────────────────────────────────────┐       S904
│            determining target DCI is from the candidate DCI               │
└────────────────────────────────────────────────────────────────┘

┌────────────────────────────────────────────────────────────────┐       S905
│   determining that a size of the target DCI and the size of the DCI for   │
│          scheduling the data of the multiple cells are aligned            │
└────────────────────────────────────────────────────────────────┘
```

FIG. 9

FIG. 10

FIG. 11

aligning a size of first DCI for scheduling uplink data of multiple cells with a size of second DCI for scheduling downlink data of the multiple cells — S1201

FIG. 12

aligning sizes of DCI for scheduling data of a single cell based on a predefined mechanism — S1301

determining the sizes of the DCI for scheduling the data of the single cell and a size of DCI for scheduling data of multiple cells in a cell for sending the DCI — S1302

determining candidate DCI from the DCI for scheduling the data of the single cell in case that a number of DCI size categories is greater than a preset threshold — S1303

determining target DCI from the candidate DCI — S1304

aligning a size of the target DCI with the size of the DCI for scheduling the data of the multiple cell — S1305

FIG. 13

apparatus for a DCI size alignment

processing module — 1401

FIG. 14

apparatus for a DCI size alignment

processing module ⌐ 1501

FIG. 15

apparatus for a DCI size alignment

processing module ⌐ 1601

FIG. 16

apparatus for a DCI size alignment

processing module ⌐ 1701

FIG. 17

apparatus for a DCI size alignment

processing module ⌐ 1801

FIG. 18

apparatus for a DCI size alignment

processing module ⌐ 1901

FIG. 19

FIG. 20

2100

2102

2104 — Memory

2106 — Power component

2108 — Multimedia component

2110 — Audio component

Processing component

2120

Processor

Communication component — 2116

Sensor component — 2114

Input/output (I/O) interface — 2112

FIG. 21

## INTERNATIONAL SEARCH REPORT

| International application No. |
| --- |
| **PCT/CN2022/095082** |

| A. | CLASSIFICATION OF SUBJECT MATTER |
| --- | --- |
| | H04L1/00(2006.01)i;H04L27/00(2006.01)i |

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; DWPI; SIPOABS; CNTXT; WOTXT; EPTXT; USTXT; CNKI; 3GPP: 小米, 下行控制信息, 小区, 多, 尺寸, 大小, 对齐, 对准, 0_3, 1_3, DCI, format, align+, cell?, multi+, size

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113473634 A (INTEL CORP.) 01 October 2021 (2021-10-01) description, paragraphs [0028]-[0281], and figures 1-15 | 1-39 |
| A | CN 113517946 A (HUAWEI TECHNOLOGIES CO., LTD.) 19 October 2021 (2021-10-19) entire document | 1-39 |
| A | WO 2021206422 A1 (LG ELECTRONICS INC.) 14 October 2021 (2021-10-14) entire document | 1-39 |
| A | WO 2021197336 A1 (VIVO MOBILE COMMUNICATION CO., LTD.) 07 October 2021 (2021-10-07) entire document | 1-39 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 February 2023** | **17 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<table>
<tr><td colspan="2" align="center"><b>INTERNATIONAL SEARCH REPORT</b><br><b>Information on patent family members</b></td><td colspan="2">International application No.<br><br><b>PCT/CN2022/095082</b></td></tr>
<tr><td>Patent document<br>cited in search report</td><td>Publication date<br>(day/month/year)</td><td>Patent family member(s)</td><td>Publication date<br>(day/month/year)</td></tr>
<tr><td>CN    113473634  A</td><td>01 October 2021</td><td>None</td><td></td></tr>
<tr><td>CN    113517946  A</td><td>19 October 2021</td><td>WO    2021204107  A1</td><td>14 October 2021</td></tr>
<tr><td>WO    2021206422  A1</td><td>14 October 2021</td><td>KR    20220148848  A</td><td>07 November 2022</td></tr>
<tr><td>WO    2021197336  A1</td><td>07 October 2021</td><td>CN    113473611  A</td><td>01 October 2021</td></tr>
</table>

Form PCT/ISA/210 (patent family annex) (July 2022)